# EUROPEAN PATENT APPLICATION

(11) **EP 2 400 446 A1**
(43) Date of publication of application: **28.12.2011**
(21) Application number: 11170493.8
(22) Date of filing: 20.06.2011
(51) Int. Cl.: G06Q 10/00

(54) **Equipment managing apparatus, equipment managing method, and equipment managing system**

(30) Priority: 25.06.2010 JP 2010145248
(71) Applicant: Ricoh Company, Ltd., Tokyo 143-8555 (JP)
(72) Inventor: Takami, Kana, Tokyo, 143-8555 (JP); Sugasaki, Daichi, Tokyo, 143-8555 (JP)
(74) Representative: Schwabe - Sandmair - Marx

(57) **Abstract**

An equipment managing apparatus manage equipments via a data channel. Management information for grouping an equipment to be managed according to a condition is retained, and request process content information indicating contents of a request process and equipment information is acquired from event information. The equipment managing apparatus updates the management information based on the request process content information and the equipment information, in order to register or delete data of the management information.

## Description

### BACKGROUND OF THE INVENTION

### 1. Field of the Invention

The present invention relates to an equipment managing apparatus to manage an equipment connected thereto via a predetermined data channel, and to an equipment managing method and an equipment managing system.

### 2. Description of the Related Art

There is a known equipment managing system configured to manage equipments based on management information (or group management information) that groups the equipments to be managed according to a predetermined condition.

For example, a Japanese Laid-Open Patent Publication No.2005-18279 proposes a technique to manage network devices using a tree structure, in accordance with the hierarchical structure of the assigned organization.

However, the conventional equipment managing method requires manual updating of the management information depending on changes in the equipment configuration.

In the equipment managing system, the equipment configuration on the network may change due to set up of a new equipment, replacement of an equipment, and removal of an equipment. When such a change occurs in the equipment configuration, the management information must be updated from the point of view of the system operation. A manager performs such a data update operation by editing CSV (Comma-Separated Values) data that is obtained by exporting the management information, and importing such edited data, for example. In other words, the manager updates the management information by a manual operation which is troublesome for the manager.

In addition, in a user environment in which the number of equipments to be managed is large (that is, the equipment managing system has a large scale) or, in a user environment in which the equipment configuration is frequently changed, it may take time until the management information is updated to the most recent data. Moreover, an editing error may be generated by the manual operation, particularly if the updating needs to be performed at a relatively large number of locations.

Accordingly, the conventional equipment managing method may cause the performance of the equipment managing function to deteriorate if the equipment configuration of the equipments to be managed changes.

### SUMMARY OF THE INVENTION

Accordingly, it is a general object in one embodiment of the present invention to provide a novel and useful equipment managing apparatus, equipment managing method and equipment managing system, in which the problem described above may be suppressed.

Another and more specific object in one embodiment of the present invention is to provide an equipment managing apparatus, an equipment managing method and an equipment managing system, that may automatically update the management information depending on a change in the equipment configuration of the equipments to be managed.

According to one aspect of the present invention, there is provided an equipment managing apparatus to manage equipments via a data channel, including retaining means for retaining, in a predetermined storage region, management information for grouping an equipment to be managed according to a predetermined condition; event detecting means for detecting event information that is issued when a change occurs in an equipment configuration of the equipments to be managed, and acquiring, from the event information, request process content information indicating contents of a request process and equipment information; and information managing means for updating the management information based on the request process content information and the equipment information, wherein the information managing means makes a reference to registered grouping condition information of groups registered in the management information retained in the retaining means, based on grouping condition information of a belonging group to which the equipment to be managed belongs and included in the equipment information, to make a judgement on whether the belonging group exists within the registered groups, and wherein data of the management information is registered or deleted according to the request process content information and a result of the judgement made by the information managing means.

According to one aspect of the present invention, there is provided an equipment managing method to be implemented in an equipment managing apparatus that manages equipments via a data channel and includes a retaining means for retaining, in a predetermined storage region, management information for grouping an equipment to be managed according to a predetermined condition, the equipment managing method including an event detecting procedure to detect event information that is issued when a change occurs in an equipment configuration of the equipments to be managed, and to acquire, from the event information, request process content information indicating contents of a request process and equipment information; a judging procedure to make a reference to registered grouping condition information of groups registered in the management information retained in the retaining means, based on grouping condition information of a belonging group to which the equipment to be managed belongs and included in the equipment information, and make a judgement on whether the belonging group exists within the registered groups; and an information update procedure to register or delete data of the management information according to the request process content information and a result of the judgement made by the judging procedure.

According to one aspect of the present invention, there is provided an equipment managing system including a plurality of equipments; and an equipment managing apparatus to manage the plurality of equipments via a data channel, the equipment managing apparatus including retaining means for retaining, in a predetermined storage region, management information for grouping an equipment to be managed according to a predetermined condition; event detecting means for detecting event information that is issued when a change occurs in an equipment configuration of the plurality of equipments to be managed, and acquiring, from the event information, request process content information indicating contents of a request process and equipment information; and information managing means for updating the management information based on the request process content information and the equipment information, wherein the information managing means makes a reference to registered grouping condition information of groups registered in the management information retained in the retaining means, based on grouping condition information of a belonging group to which the equipment to be managed belongs and included in the equipment information, to make a judgement on whether the belonging group exists within the registered groups, and wherein data of the management information is registered or deleted according to the request process content information and a result of the judgement made by the information managing means.

Other objects and further features of the present invention will be apparent from the following detailed description when read in conjunction with the accompanying drawings.

### BRIEF DESCRIPTION OF THE DRAWINGS

FIG. 1 is a block diagram illustrating an example of a hardware structure of an equipment managing apparatus in a first embodiment of the present invention;
FIG. 2 is a block diagram illustrating an example of an equipment managing function in the first embodiment of the present invention;
FIGS. 3A and 3B are diagrams for explaining an example of data of group management information in the first embodiment of the present invention;
FIG. 4 is a diagram illustrating an example of a management screen in the first embodiment of the present invention;
FIGS. 5A and 5B are flow charts for explaining a processing procedure at the time of a data registration in the first embodiment of the present invention;
FIGS. 6A and 6B are diagrams for explaining an example of a new equipment registering operation in the first embodiment of the present invention;
FIGS. 7A and 7B are diagrams for explaining the example of the new equipment registering operation in the first embodiment of the present invention;
FIGS. 8A and 8B are flow charts for explaining a processing procedure at a time of a data deletion in the first embodiment of the present invention;
FIGS. 9A and 9B are diagrams for explaining an example of the registered equipment delete operation in the first embodiment of the present invention;
FIGS. 10A and 10B are diagrams for explaining the example of the registered equipment delete operation in the first embodiment of the present invention;
FIG. 11 is a flow chart for explaining a processing procedure to judge the existence of the group and the equipment belonging to the group in the first embodiment of the present invention;
FIG. 12 is a flow chart for explaining a processing procedure at the time of the data deletion in the first embodiment of the present invention;
FIGS. 13A and 13B are diagrams illustrating an example of the data of the group management information by a network setting and a management screen in a modification of the present invention; and
FIG. 14 is a flow chart for explaining a processing procedure at the time of changing the network setting in the modification of the present invention.

### DESCRIPTION OF THE PREFERRED EMBODIMENTS

A description will be given of an equipment managing apparatus, an equipment managing method and an equipment managing system in embodiments according to the present invention, by referring to the drawings.

### [First Embodiment]

### <Hardware Structure>

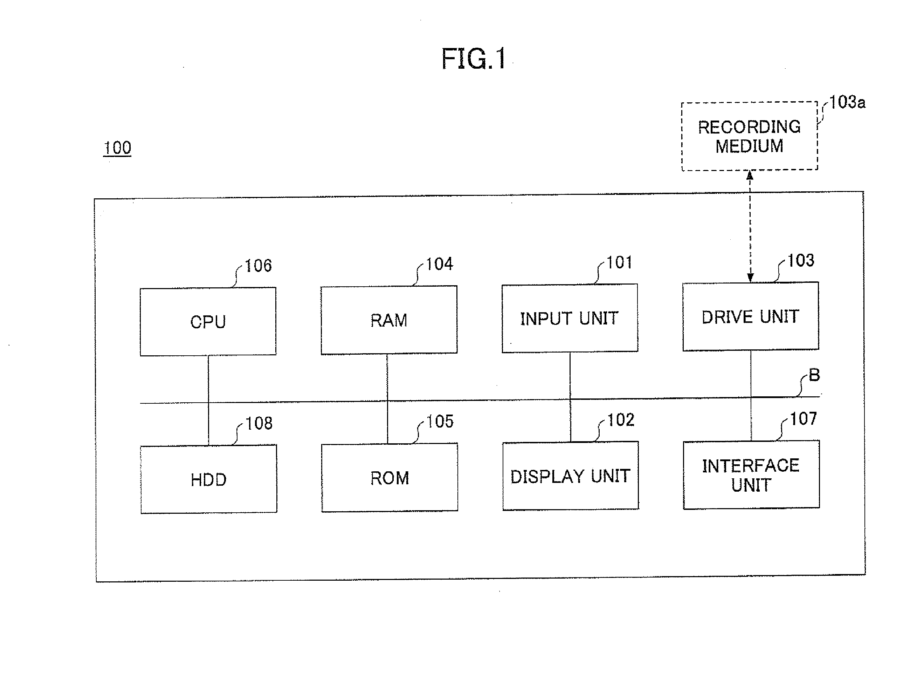

FIG. 1 is a block diagram illustrating an example of a hardware structure of an equipment managing apparatus in a first embodiment of the present invention. As illustrated in FIG. 1, an equipment managing apparatus 100 includes an input unit 101, a display unit 102, a drive unit 103, a RAM (Random Access Memory) 104, a ROM (Read Only Memory) 105, a CPU (Central Processing Unit) 106, an interface unit 107, and a HDD (Hard Disk Drive) 108 that are connected via a bus B.

The input unit 101 includes a keyboard, a mouse, and the like, and may be used to input various operation signals to the equipment managing apparatus 100. The display unit 102 includes a LCD (Liquid Crystal Display) and the like, and may be used to display results of processes performed by the equipment managing apparatus 100.

The interface unit 107 connects the equipment managing apparatus 100 to a data channel N. Hence, the equipment managing apparatus 100 may perform a data communication with an equipment to be managed, such as an image processing apparatus, via the interface unit 107.

The HDD 108 forms a nonvolatile storage unit to store programs and data. The programs and the data stored in the HDD 108 may include a Windows (registered trademark) or UNIX (registered trademark) Operating System (OS) that forms an information processing system to control the entire equipment managing apparatus 100, and applications (or application software) to provide various functions (for example, an equipment managing function) on the OS. In addition, the programs and the data stored in the HDD 108 may be managed by a predetermined file system and/or a DB (Data-Base).

The drive unit 103 provides an interface for a recording medium 103a that is removably connected to the equipment managing apparatus 100. Hence, the equipment managing apparatus 100 may read data from and/or write data to the recording medium 103a via the drive unit 103. The recording medium 103a may be formed by a floppy disk (registered trademark), a CD (Compact Disk), a DVD (Digital Versatile Disk), SD (Secure Digital) memory card, a USB (Universal Serial Bus) memory, and the like.

The ROM 105 may be formed by a nonvolatile semiconductor memory (or storage unit) to store internal data and the like and to retain the stored data even when the power is turned off. The ROM 105 may store a BIOS (Basic Input/Output System), programs for performing the information processing system settings and the network settings, and data. The RAM 104 may be formed by a volatile semiconductor memory (or storage unit) to temporarily store programs and data. The CPU 106 reads the programs and the data from the storage unit described above, such as the HDD 108 and the ROM 105, temporarily stores the read programs and the data in the RAM 104, and executes the programs stored in the RAM 104, in order to control the entire equipment managing apparatus 100 and to realize the functions thereof.

The equipment managing apparatus 100 may provide various information processing services using the hardware structure described above.

### <Equipment Managing Function>

Next, a description will be given of the equipment managing function of this embodiment. In the equipment managing apparatus 100 of this embodiment, the equipment managing apparatus 100 first receives event information that is issued when a change occurs in the equipment configuration. The equipment managing apparatus 100 acquires, from the received event information, contents of a request process (registration or deletion of management data), and a grouping condition (judging value) of a group to which the equipment belongs (hereinafter also referred to as a "belonging group"). Based on the acquired grouping condition, the equipment managing apparatus 100 makes a reference to the grouping condition (registered value) of the groups that are registered in the management information (hereinafter also referred to as a "registered groups"), and judges whether the belonging group of the equipment exists within the registered groups. The equipment managing apparatus 100 registers or deletes the management data according to the contents of the request process and the judgement result on whether the belonging group of the equipment exists within the registered groups, and updates the management information. The equipment managing apparatus 100 of this embodiment includes this equipment managing function described above.

Conventionally, the manager updates the management information by a manual operation, which is troublesome for the manager. In addition, the manual operation may take a long time to perform and may include an error. Hence, if a change occurs in the equipment configuration of the equipments to be managed, the performance of the conventional equipment managing function may deteriorate.

On the other hand, in the equipment managing apparatus 100 of this embodiment, when a change occurs in the equipment configuration, a judgement is made to determine whether the belonging group of the equipment to be managed exists within the registered groups, and the management data is registered or deleted according to the judgement result.

Hence, according to the equipment managing apparatus 100 of this embodiment, the management information is automatically updated depending on the change in the equipment configuration of the equipments to be managed. As a result, the operation of the manager may be reduced, and the performance of the equipment managing function may be prevented from deteriorating due to a delay in updating the information, errors made by the manager, and the like.

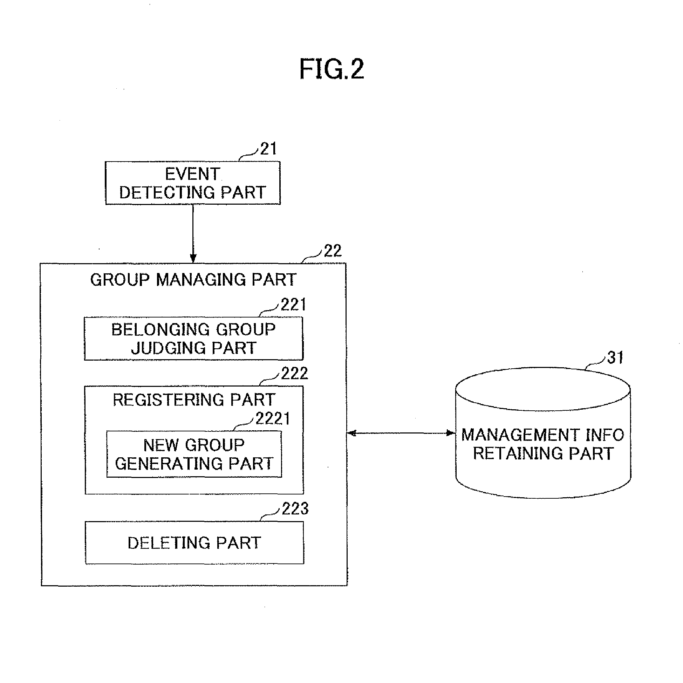

Next, a description will be given of the structure and operation of the equipment managing function of this embodiment. FIG. 2 is a block diagram illustrating an example of the equipment managing function in the first embodiment of the present invention. As illustrated in FIG. 2, the equipment managing function of this embodiment includes an event detecting part 21 and a group managing part 22.

The event detecting part 21 forms a function part to accept event information that is issued when a change occurs in the equipment configuration. The change in the equipment configuration includes, for example, set up of a new equipment, replacement of an equipment, and removal of an equipment. In this case, equipment identification information to identify the equipment is registered or deleted in the equipment managing apparatus 100. The equipment identification information may include a serial number or network setting information, such as an IP (Internet Protocol) address and a MAC (Media Access Control) address. The event detecting part 21 receives the event information that is issued by the data operation to register or delete the equipment identification information. The event information may include information indicating the contents of the request process (hereinafter also referred to as "request process content information"), such as registration or deletion of the management data, and equipment information such as a MIB (Management Information Base) value. Hence, the event detecting part 21 may acquire the request process content information and the equipment information when accepting the event information that is issued.

The group managing part 22 forms a function part to perform a predetermined data operation according to the request process, with respect to the management information that groups the equipment to be managed according to a predetermined condition (hereinafter also referred to as "group management information"), in order to manage the groups registered within the management information (hereinafter also referred to as "registered group").

The group management information is retained in the management information retaining part 31. Hence, the group managing part 22 may manage the registered groups by accessing the management information retaining part 31 and performing a predetermined data operation. For example, the management information retaining part 31 may correspond to a predetermined storage region of the storage unit (for example, the HDD 108) of the equipment managing apparatus 100. Further, the data operation performed with respect to this storage region may include data registration (add), modify (change), delete, refer (search), acquisition, and the like.

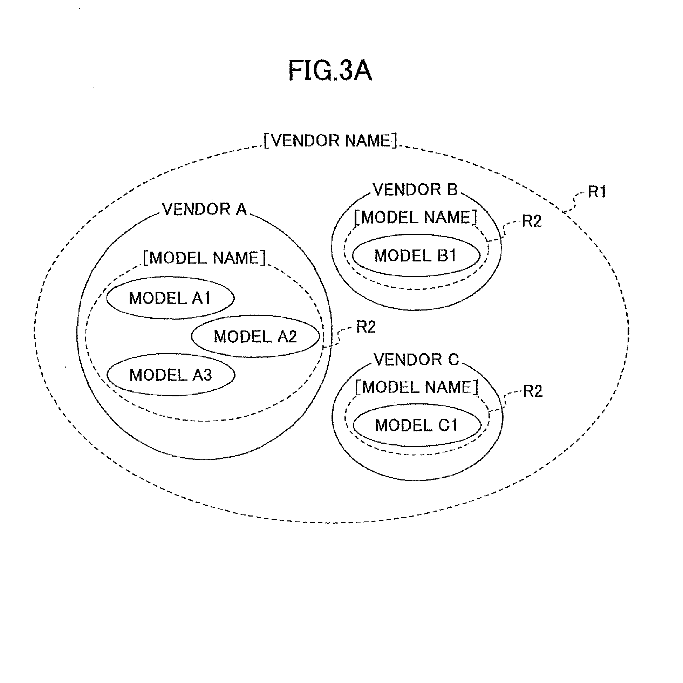

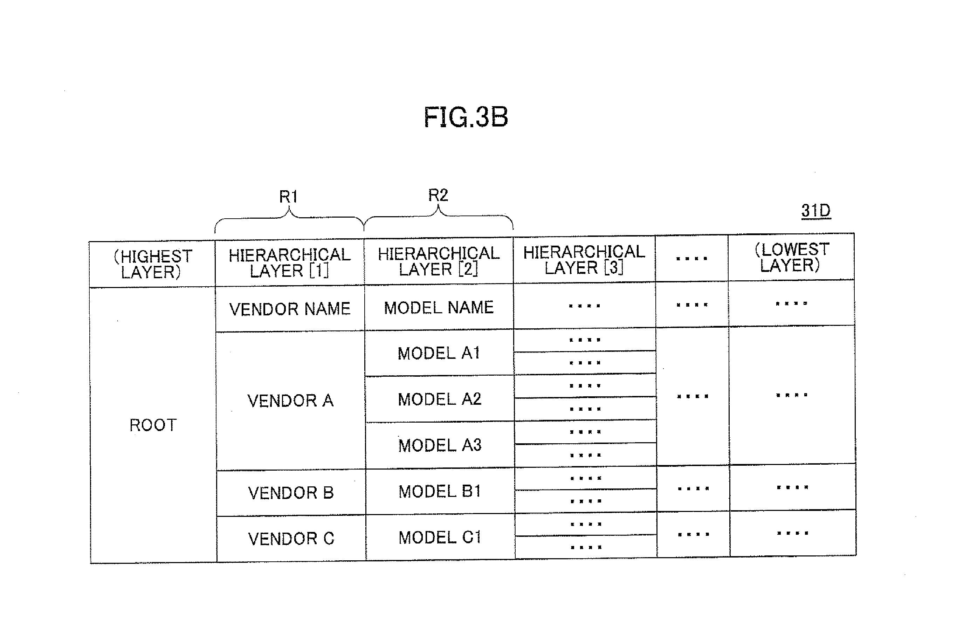

Next, a description will be given of the group management information corresponding to the grouping according to the predetermined condition. FIGS. 3A and 3B are diagrams for explaining an example of data of the group management information in the first embodiment of the present invention.

FIG. 3A illustrates a grouping example according to a vendor name R1 and a model name R2 of the equipment to be managed. It is assumed in this embodiment that the grouping condition has a hierarchical structure.

In this example illustrated in FIG. 3A, the grouping condition [vendor name] R1 corresponds to the first hierarchical layer, and the grouping condition [model name] R2 corresponds to the second hierarchical layer (or second highest level). These hierarchical layers represent the inclusion relationship of each of the groups. For example, the 3 groups (model A1, model A2, model A3) of the second hierarchical layer is included in the group (vendor A) of the first hierarchical layer.

In this embodiment, the equipment to be managed is classified and managed as an equipment belonging to a specific group, according to the grouping condition (hierarchical layer representing the inclusion relationship of the group) described above. For example, an equipment that is the model A1 of the vendor A is managed as an equipment to be managed and belonging to the group (model A1) of the second hierarchical layer included in the group (vendor A) of the first hierarchical layer, according to each condition value of the "vendor A" and the "model A1". These grouping conditions may be determined in advance by the manager, depending on the equipment classifying policy (or grouping policy).

FIG. 3B illustrates an example of the management data to be group according to the conditions illustrated in FIG. 3A. As illustrated in FIG. 3B, group management information 31D includes a grouping condition item of the group corresponding to each hierarchical layer, in correspondence with each inclusion relationship of the group. An item [grouping condition] is an item of the information (grouping condition information) representing the grouping condition, and an item value registers and manages a condition value, such as data (identifier) to identify the [vendor name] and the [model name], for example.

In the example of the management data illustrated in FIG. 3B, character string data (condition values), such as the "vendor A", the "vendor B", and the "vendor C", are registered in the condition item [vendor name] R1 of the group corresponding to the first hierarchical layer. In addition, character string data, such as the "model A1", the "model A2", and the "model A3" included in the group (vendor A) of the first hierarchical layer, and the "model B1" included in the group (vendor B) of the first hierarchical layer, are registered in the condition item [model name] R2 of the group corresponding to the second hierarchical layer.

In addition, each item value from the group of the first hierarchical layer to the lowest hierarchical layer is registered in the group management information 31D, in correspondence with and in a sequence from a group (ROOT) in the highest hierarchical layer of hierarchical structure. Hence, the hierarchical layers of the hierarchical structure have a parent-child relationship.

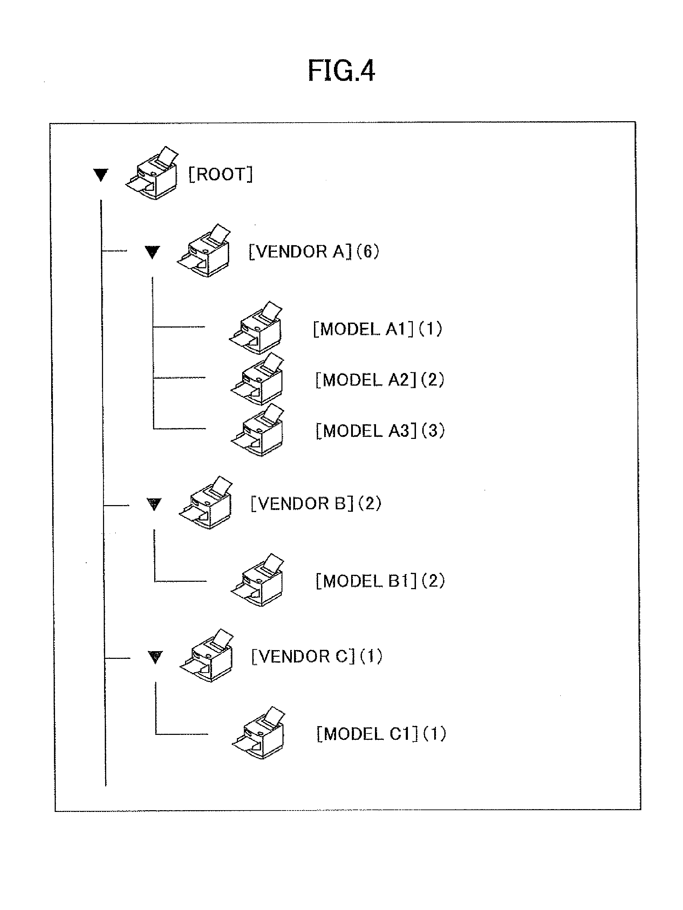

The management information retaining part 31 retains the group management information 31D having the data structure described above. The group managing part 22 may display a management screen illustrated in FIG. 4, for example, by making access to the management information retaining part 31 and making a reference to the group management information 31D.

FIG. 4 is a diagram illustrating an example of the management screen in the first embodiment of the present invention. In the example illustrated in FIG. 4, the equipments to be managed are classified in a hierarchical structure that is visible on the management screen, according to the grouping condition of the "vendor name" and the "model name". The manager may easily comprehend from the management screen the number of equipments to be managed in the equipment managing system and the "model name" and the "vendor name" of the equipments to be managed.

In addition, the group managing part 22 makes access to the management information retaining part 31 and registers or deletes the item value of the group management information 31D, to manage the registered groups. More particularly, if a change occurs in the equipment configuration of the equipment managing system, the group managing part 22 judges whether the belonging group of the equipment to be managed exists within the registered groups, and registers or deletes the management data of the group management information 31D according on the judgement result. For this purpose, the group managing part 22 includes a belonging group judging part 211 to judge whether the belonging group of the equipment to be managed exists within the registered groups, a registering part 223 to register the management data of the request process according to the judgement result of the belonging group judging part 211, and a deleting part 223 to delete the management data of the request process according to the judgement result of the belonging group judging part 211.

Next, a description will be given of the linked operation of these function parts.

First, the group managing part 22 acquires the request process content information from the event information received by the event detecting part 21, and acquires the grouping condition information of the belonging group of the equipment from the equipment information included in the event information. For example, only predetermined information is extracted by the acquisition of the grouping condition information. The information to be extracted from the equipment information may be predetermined according to the equipment classifying policy. For example, when classifying the equipment by the "vendor name" and the "model name", only the information of the "vendor name" and the "model name" may be extracted from the equipment information.

Based on the acquired grouping condition information, the belonging group judging part 211 makes a reference to the management data (item value of the grouping condition item) of the group management information 31D, and judges whether the belonging group of the equipment to be managed exists within the registered groups. When making this judgement, the belonging group judging part 211 compares the acquired grouping condition information and the registered grouping condition information that is registered in the group management information 31D, for each group corresponding to each of the hierarchical layers. In other words, the value acquired from the equipment information corresponds to the judgement value to judge the existence of the belonging group, and the belonging group judging part 211 compares the judging value and the registered value of the group management information 31D. Based on a comparison result indicating whether the acquired grouping condition information (hereinafter also referred to as the "judging value") and the registered grouping condition information (hereinafter also referred to as the "registered values") match, the belonging group judging part 211 judges whether the belonging group of the equipment to be managed exists within the registered groups.

The belonging group judging part 211 performs processes that partially differ at the time of the data registration and at the time of the data deletion, based on the acquired process request content information. More particularly, in a case where the acquired request process content information is a "data deletion request", the belonging group judging part 211 performs, in addition to judging the existence of the belonging group, a judgement to determine whether a belonging equipment exists (judgement to determine whether an equipment to be managed, other than the equipment to be deleted, belongs to the belonging group). This additional judgement is performed in order not to erroneously delete the registered equipment to be managed, other than the equipment to be deleted, by a data delete process.

If the belonging group judging part 221 judges that the "belonging group exists", the belonging group judging part 221 judges whether the equipment to be managed, other than the equipment that is judged as the equipment to be deleted, belongs to the belonging group, based on whether the number of equipments belonging to the group corresponding to the matching hierarchical layer (hereinafter also referred to as the "number of registered equipments") is zero.

Based on the judgement result of the belonging group judging part 221, the registering part 222 and the deleting part 223 executes an update process (information update by registration or deletion of the management data) that is requested.

The registering part 222 functions when the acquired request process content information is a "data registration request". In a case where the judgement result of the belonging group judging part 221 is "no belonging group", the registering part 222 makes access to the management information retaining part 31, and registers the management data in the group management information 31D. More particularly, the registration of the management data is performed in the following manner.

If the belonging group judging part 221 judges "no belonging group", the registering part 222 registers the acquired value from the equipment information to the grouping condition items from the hierarchical layer (non-matching hierarchical layer) that is judged as having no belonging group to the lowest hierarchical layer in the hierarchical structure, and updates the management data. Hence, a group to which a new equipment belongs is generated in the group management information 31D in a case where an equipment of a new vendor or model is registered as an equipment to be managed (new equipment registration) in the equipment managing system. The registering part 222 includes a new group generating part 2221 to generate the group to which the new equipment belongs.

The deleting part 223 functions when the acquired request process content information is a "data deletion request". In a case where the judgement result of the belonging group judging part 221 is "belonging group exists", the deleting part 223 makes access to the management information retaining part 31, and deletes the corresponding management data from the group management information 31D. More particularly, the deletion of the management data is performed in the following manner.

If the belonging group judging part 221 judges "belonging group exists", the deleting part 223 deletes the registered value (item values of the corresponding group) of the grouping condition items from the hierarchical layer (matching hierarchical layer) that is judged as having the belonging group to the lowest hierarchical layer in the hierarchical structure, and updates the management data, when no equipment to be managed other than the equipment to be deleted belongs to the group corresponding to the hierarchical layer that is judged as having the belonging group (when the number of belonging equipments is zero).

Therefore, in the equipment managing apparatus 100 of this embodiment, the group management information 31D is automatically updated depending on the change in the equipment configuration of the equipments to be managed in the equipment managing system.

The equipment managing function of this embodiment is realized by the linked operation of each of the function parts described above. The equipment managing function of this embodiment may be realized by reading the program (software that realizes the equipment managing function) installed in the equipment managing apparatus 100 from the storage unit (for example, the HDD 108 or the ROM 105) and temporarily storing the read program in the storage unit (for example, the RAM 104) the by the processing unit (for example, the CPU 106) that executes the program. As a result, the following process may be realized by executing the program.

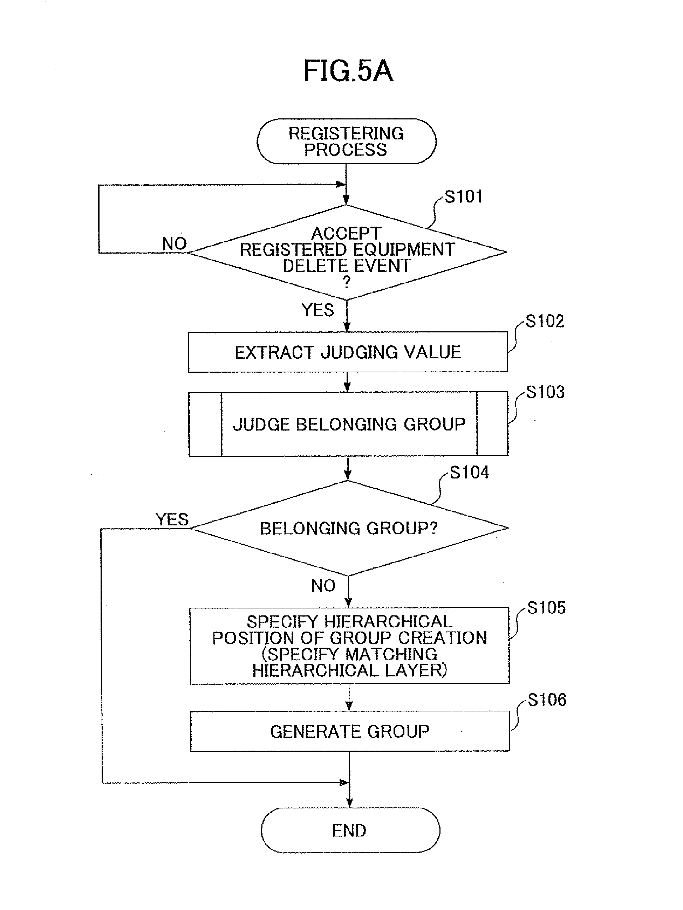

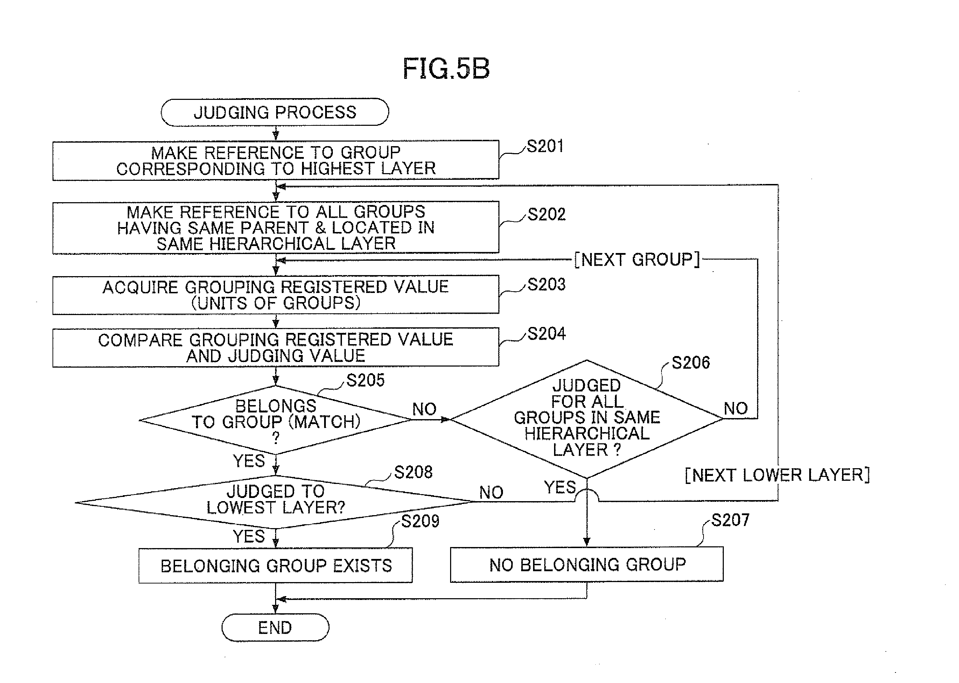

Next, a more detailed description will be given of the operation (linked operation of function part group) of the equipment managing function of this embodiment, by referring to FIGS. 5A and 5B. FIGS. 5A and 5B are flow charts for explaining a processing procedure at the time of the data registration in the first embodiment of the present invention.

### «Main Process at the Time of Registration»

A description will be given of the data registration process for the case where the new equipment registration is made. FIG. 5A illustrates the registration process. As illustrated in FIG. 5A, the equipment managing apparatus 100 decides whether the event information of the new equipment registration is received from the event detecting part 21, in a step S101. If the decision result in the step S101 is YES, the equipment managing apparatus 100 acquires the request process content information and the equipment information from the event information, and the process advances to a step S102.

The group managing part 22 of the equipment managing apparatus 100 extracts, from the equipment information, the judging value to judge whether the belonging group of the equipment to be registered exists within the registered groups, in the step S102. The equipment managing apparatus 100 judges by the registering part 222 of the group managing part 22 whether the belonging group of the equipment to be registered exists within the registered groups, based on the acquired judging value, in a step S103. The details of judging the existence of the belonging group of the equipment to be registered will be described later in conjunction with FIG. 5B.

The equipment managing apparatus 100 decides, based on the judgement of the step S103, whether the belonging group of the equipment to be registered is found (or not found) within the registered groups, in a step S104. If no belonging group of the equipment to be registered is found and the decision result in the step S104 is NO, the registering part 222 of the group managing part 22 specifies the hierarchical position of the newly created group, in a step S105. In this state, the group managing part 22 sends the judgement result of the belonging group judging part 221 to the registering part 222 of the group managing part 22, based on the request process content information. Thus, the registering part 222 may specify the hierarchical layer that is judged as having no belonging group, as the hierarchical layer in which the group is to be created.

As a result, the equipment managing apparatus 100 generates in the group management information 31D the new group from the specified hierarchical layer to the lowest hierarchical layer based on the acquired judging value, by the registering part 222, in a step S106. In this state, the registering part 222 makes access to the management information retaining part 31, and registers the corresponding judging value in the grouping condition items from the specified hierarchical layer to the lowest hierarchical layer, in the group management information 31D, in order to update the management data and generate the new group.

If the belonging group of the equipment to be registered is found and the decision result in the step S104 is YES, the equipment managing apparatus 100 judges that a new group needs to be generated according to the new equipment registration, and the registration process ends.

### «Belonging Group Existence Judging Process»

A description will be given of the processes of the belonging group judging part 221 in the steps S103 and S104, by referring to the judging process illustrated in FIG. 5B.

As illustrated in FIG. 5B, the belonging group judging part 221 makes a reference to the group corresponding to the highest hierarchical layer, in a step S201. In this state, the belonging group judging part 221 makes access to the management information retaining part 31, and makes a reference to the group management information 31D.

Then, the belonging group judging part 221 makes a reference to all groups having the same parent and located in the same hierarchical layer, within the group management information 31D, in a step S202. More particularly, a reference is made to the following groups. That is, the belonging group judging part 221 makes a reference to the group (ROOT) corresponding to the highest hierarchical layer, and makes a reference to all groups having the group (ROOT) as the parent and located in the same hierarchical layer. Accordingly, the equipment managing apparatus 100 first makes a reference to the groups in the first hierarchical layer which is 1 layer lower than the highest hierarchical layer.

Next, the belonging group judging part 221 acquires the registered value of the registered grouping condition items, in units of groups, in a step S203. In this state, the belonging group judging part 221 acquires from the group management information 31D the registered value of the grouping condition items in the hierarchical layer to which the reference is made by the step S202.

The belonging group judging part 221 compares the acquired registered values and the judging value extracted from the equipment information of the equipment to be registered, in a step S204. In this state, the belonging group judging part 221 compares the registered values and the judging value corresponding to the information item of the group management information 31D from which the registered values are acquired. In other words, the equipment managing apparatus 100 compares the grouping conditions located in the same hierarchical layer, between the registered information of the group management information 31D and the equipment information of the equipment to be registered.

The belonging group judging part 221 decides, from the comparison of the step S204, whether the equipment to be registered belongs to the registered group (group to which the reference is presently being made), in a step S205. If the belonging group judging part 221 judges that the compared values do not match and the equipment to be registered does not belong to the registered group (group to which the reference is presently being made), the decision result in the step S205 is NO and the process advances to a step S206. The belonging group judging part 221 decides whether a judgement to determine the existence of the belonging group in all groups (all groups to which the reference is made) of the same hierarchical layer, in the step S206.

If the belonging group judging part 221 judges that the existence of the belonging group in all groups (all groups to which the reference is made) of the same hierarchical layer has not been judged, the decision result in the step S206 is NO. If the decision result in the step S206 is NO, the process returns to the step S203, in order to repeat the process of judging the existence of the belonging group in the group to which the reference is made but the existence of the belonging group has not been judged. On the other hand, if the belonging group judging part 221 judges that the existence of the belonging group in all groups (all groups to which the reference is made) of the same hierarchical layer has been judged, the decision result in the step S206 is YES. If the decision result in the step S206 is YES, the judgement result "no belonging group" is sent to the registering part 222, and the process advances to a step S207.

Hence, the belonging group judging part 221 judges the existence of the belonging group with respect to all groups having the same parent and located in the same hierarchical layer, until the existence of the belonging group is confirmed. As a result, if the comparison result is "no match", the belonging group judging part 221 judges that the belonging group of the equipment to be registered does not exist in all groups having the same parent and located in the same hierarchical layer. Accordingly, the process of the steps S203 to S206 is performed with respect to all groups having the same parent and located in the same hierarchical layer, until the existence of the belonging group is confirmed.

On the other hand, if the compared values match and the belonging group judging part 221 judges that the equipment to be registered belongs to the registered group (group to which the reference is presently being made), the decision result in the step S205 is YES. If the decision result in the step S205 is YES, the belonging group judging part 221 decides whether the existence of the belonging group is judged down to the group corresponding to the lowest hierarchical layer, in a step S208. If the decision result in the step S208 is NO, the process returns to the step S202 in order to repeat the process of judging the existence of the belonging group with respect to the group in the lower hierarchical layer in which the existence of the belonging group has not been judged.

On the other hand, if the decision result in the step S208 is YES, the belonging group judging part 221 sends the judgement result "belonging group exists" to the registering part 222, in a step S209.

Hence, the equipment managing apparatus 100 judges the existence of the belonging group with respect to all groups having the same parent and located in the same hierarchical layer (Nth hierarchical layer), until the existence of the belonging group is confirmed. As a result, if the comparison result is "match", the equipment managing apparatus 100 judges that the belonging group of the equipment to be registered exists in one of the groups having the same parent and located in the same hierarchical layer. In addition, when the existence of the belonging group is confirmed, the equipment managing apparatus 100 again judges the existence of the belonging group in the hierarchical layer ((N+1)th layer) that is 1 layer lower than the hierarchical layer in which the existence of the belonging group was confirmed. Accordingly, the process of the steps S202 to S208 is performed with respect to the registered groups from the highest hierarchical layer to the lowest hierarchical layer.

Therefore, at the time of registering the new equipment, the equipment managing apparatus 100 judges the existence of the belonging group, in units of groups of each hierarchical layer (groups having the same parent and located in the same hierarchical layer).

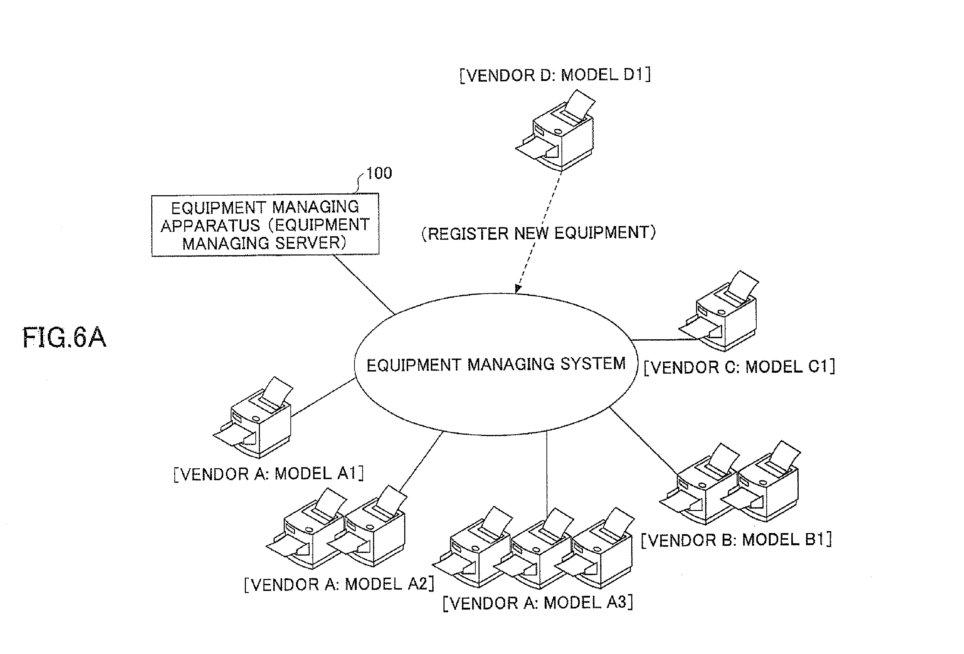

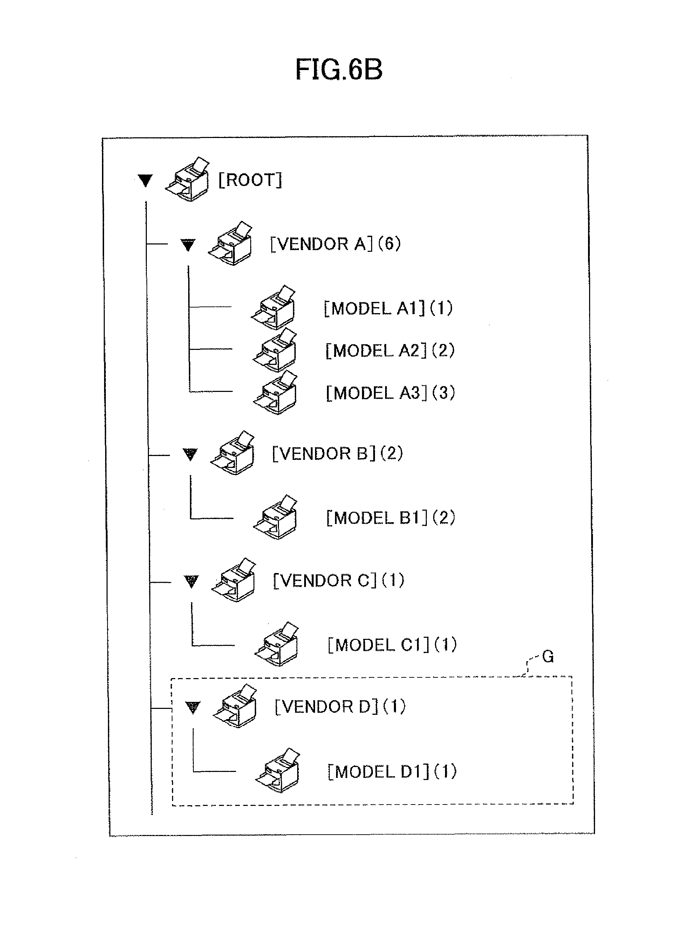

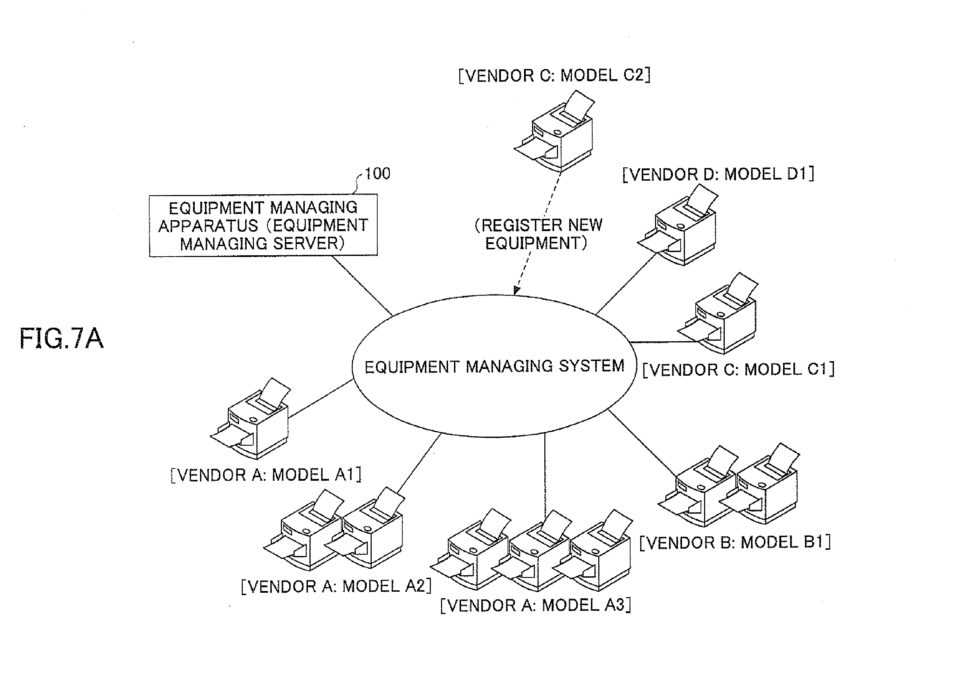

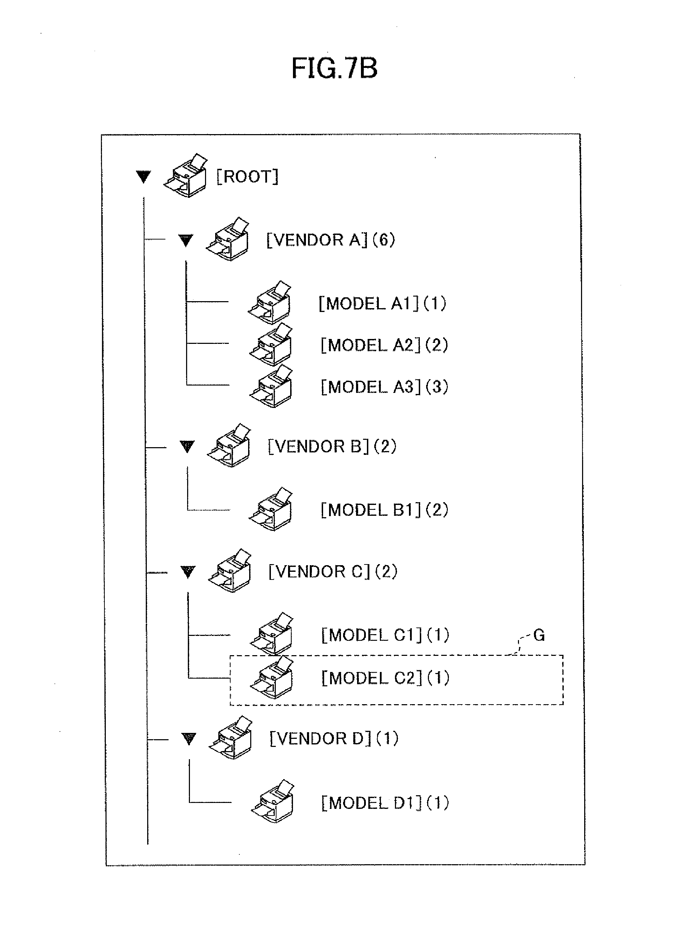

Next, a description will be given of an example operation of the processes described above in conjunction with FIGS. 5A and 5B, by referring to FIGS. 6A through 7B. FIGS. 6A, 6B, 7A and 7B are diagrams for explaining an example of a new equipment registering operation (parts 1 and 2) in the first embodiment of the present invention.

New Equipment Registration (Part 1):

FIG. 6A illustrates an example operation for a case where the new equipment registration relates to the model D1 of the vendor D. In this case, the step S102 extracts, as the judging value, the "vendor D" of the grouping condition item corresponding to the first hierarchical layer [vendor name], and the "model D1" of the grouping condition item corresponding to the second hierarchical layer [model name], from the equipment information of the equipment to be registered.

First, the belonging group judging part 221 makes a reference to the 3 groups (vendor A, vendor B, vendor C) of the same first hierarchical layer [vendor name] having the group (ROOT) of the highest hierarchical layer as the parent, within the group management information 31D.

Next, the belonging group judging part 221 compares the registered value ("vendor A", "vendor B", "vendor C") of the grouping condition item corresponding to the first hierarchical layer [vendor name], and the judging value ("vendor D") of the grouping condition item corresponding to the first hierarchical layer [vendor name] extracted from the equipment information of the equipment to be registered, for each group to which the reference is made.

As a result, the belonging group judging part 221 judges that the equipment to be registered does not belong to the registered group (group to which the reference is presently being made) because the compared values do not match, and sends the judgement result "no belonging group".

Accordingly, the registering part 222 specifies the first hierarchical layer [vendor name] that did not match, as the location of the hierarchical layer in which the group is to be newly created, and creates a new group as indicated by G in FIG. 6B. More particularly, based on the judging value (grouping condition information of the equipment to be registered) extracted from the equipment information of the equipment to be registered, the new groups from the specified first hierarchical layer [vendor name] to the lowest hierarchical layer (second hierarchical layer) is generated in the group management information 31D. The new groups generated in the group management information 31D in this example are the new group (vendor D) of the first hierarchical layer and the new group (model D1) of the second hierarchical layer included in the new group (vendor D).

As a result, the group (vendor D) corresponding to the first hierarchical layer [vendor name], and the group (model D1) corresponding to the second hierarchical layer [vendor name] under the group (vendor D) are newly registered in the group management information 31D.

New Equipment Registration (Part 2):
FIG. 7A illustrates an example operation for a case where the new equipment registration relates to the model C2 of the vendor C. In this case, the step S102 extracts, as the judging value, the "vendor C" of the grouping condition item corresponding to the first hierarchical layer [vendor name], and the "model C2" of the grouping condition item corresponding to the second hierarchical layer [model name], from the equipment information of the equipment to be registered. The group management information 31D to which the reference is made is after the equipment registration of the model D1 of the vendor D has been made.

First, the belonging group judging part 221 makes a reference to the 4 groups (vendor A, vendor B, vendor C, vendor D) of the same first hierarchical layer [vendor name] having the group (ROOT) of the highest hierarchical layer as the parent, within the group management information 31D.

Next, the belonging group judging part 221 compares the registered value ("vendor A", "vendor B", "vendor C", "vendor D") of the grouping condition item corresponding to the first hierarchical layer [vendor name], and the judging value ("vendor C") of the grouping condition item corresponding to the first hierarchical layer [vendor name] extracted from the equipment information of the equipment to be registered, for each group to which the reference is made.

As a result, the belonging group judging part 221 judges that the equipment to be registered belongs to the registered group (group to which the reference is presently being made) because the compared values match.

Then, the belonging group judging part 221 compares the registered value ("model C") of the grouping condition item corresponding to the second hierarchical layer [model name], and the judging value ("model C2") of the grouping condition item corresponding to the second hierarchical layer [model name] extracted from the equipment information of the equipment to be registered, for each group to which the reference is made.

As a result, the belonging group judging part 221 judges that the equipment to be registered does not belong to the registered group (group to which the reference is presently being made) because the compared values do not match, and sends the judgement result "no belonging group".

Accordingly, the registering part 222 specifies the second hierarchical layer [model name] that did not match, as the location of the hierarchical layer in which the group is to be newly created, and creates a new group as indicated by G in FIG. 7B. More particularly, based on the judging value (grouping condition information of the equipment to be registered) extracted from the equipment information of the equipment to be registered, the new group of the specified second hierarchical layer [model name] is generated in the group management information 31D. The new group generated in the group management information 31D in this example is the new group (model C2) of the second hierarchical layer included in the registered group (vendor C) of the first hierarchical layer.

As a result, two groups (model C1, model C2) corresponding to the second hierarchical layer [model name] are newly registered in the group management information 31D under the group (vendor C) corresponding to the first hierarchical layer [vendor name].

### «Process of Deletion: Part 1»

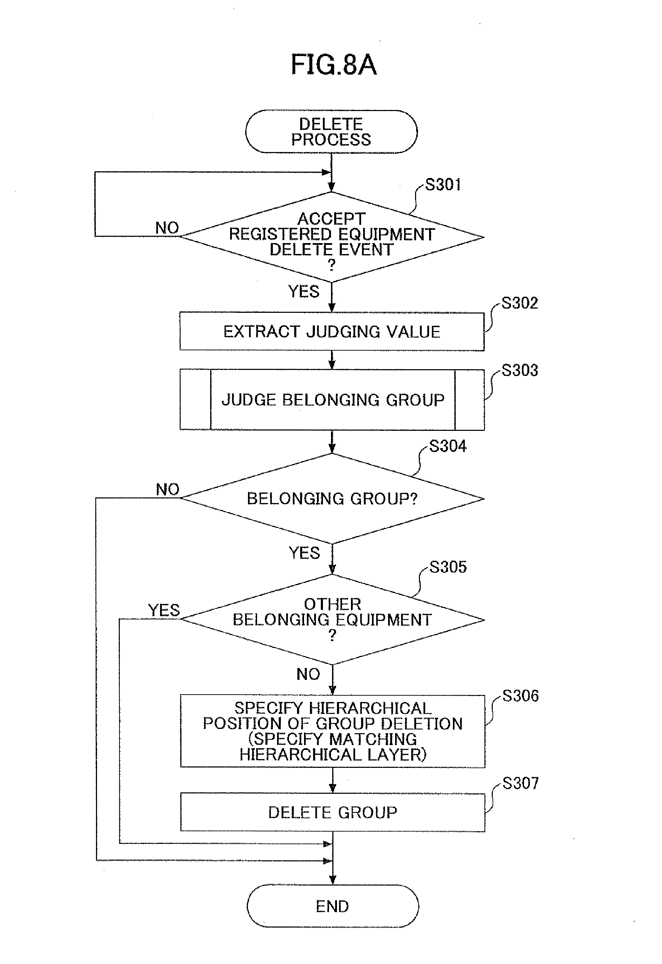

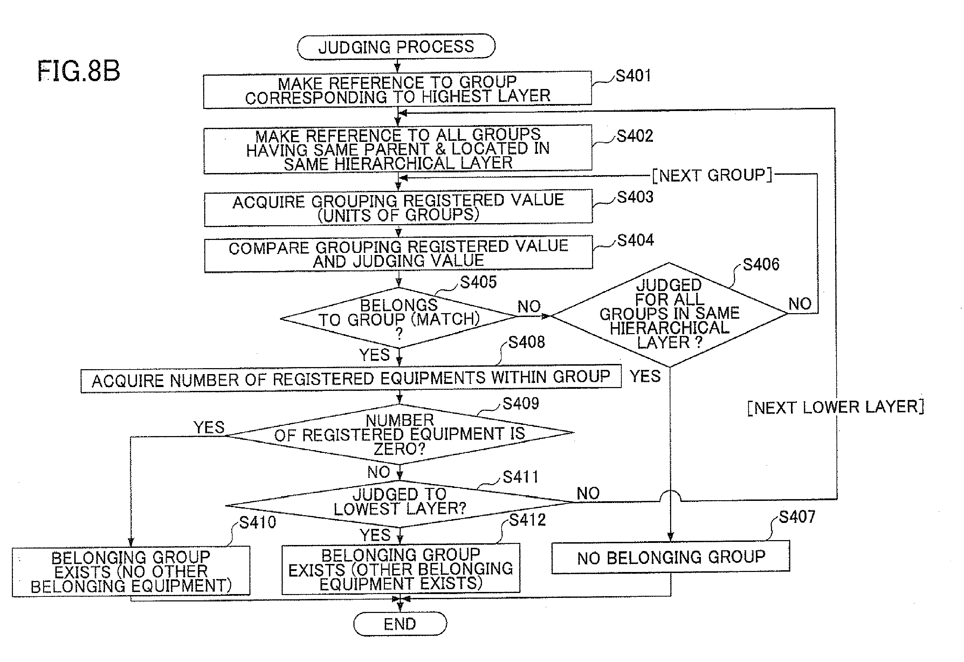

Next, a description will be given of the data deletion process for a case where the registered equipment is deleted, by referring to FIGS. 8A and 8B. FIGS. 8A and 8B are flow charts for explaining a processing procedure at a time of the data deletion in the first embodiment of the present invention.

As illustrated in FIG. 8A, the equipment managing apparatus 100 decides whether the event information of the registered equipment deletion is received from the event detecting part 21, in a step S301. If the decision result in the step S301 is YES, the equipment managing apparatus 100 acquires the request process content information and the equipment information from the event information, and the process advances to a step S302.

The group managing part 22 of the equipment managing apparatus 100 extracts, from the equipment information, the judging value to judge whether the belonging group of the equipment to be deleted exists within the registered groups, in the step S302. The equipment managing apparatus 100 judges by the group managing part 22 whether the belonging group of the equipment to be deleted exists within the registered groups, based on the acquired judging value, in a step S303. The details of judging the existence of the belonging group of the equipment to be deleted will be described later in conjunction with FIG. 8B.

The equipment managing apparatus 100 decides, based on the judgement of the step S303, whether the belonging group of the equipment to be deleted is found within the registered groups, in a step S304. If the belonging group of the equipment to be deleted is found and the decision result in the step S304 is YES, the belonging part judging part 221 decides whether a belonging equipment (belonging equipment to be managed) other than the equipment to be deleted exists (or does not exist) in the belonging group, in a step S305. In this state, the belonging group judging part 221 judges whether the equipment to be managed, other than the equipment to be deleted, belongs to the group, based on the number of registered equipments of the group.

If the equipment managing apparatus 100 judges that the there is no belonging equipment other than the equipment to be deleted exists in the belonging group and the decision result in the step S305 is NO, the deleting part 223 of the group managing part 22 specifies the hierarchical location of the group to be deleted, in a step S306. In this state, the group managing part 22 sends the judgement result of the belonging group judging part 221 to the deleting part 223 of the group managing part 22, based on the request process content information. The deleting part 223 specifies, as the hierarchical layer in which the group is to be deleted, the hierarchical layer that is judged as including the belonging group and not including the belonging equipment.

As a result, the equipment managing apparatus 100 deletes from the group management information 31D the group from the specified hierarchical layer to the lowest hierarchical layer, by the deleting part 223, in a step S307. In this state, the deleting part 223 makes access to the management information retaining part 31, and deletes the registered value of the grouping condition item from the specified hierarchical layer to the lowest hierarchical layer, in the group management information 31D, in order to update the management data and delete the group.

If the belonging group of the equipment to be deleted is not found and the decision result in the step S304 is NO, the equipment managing apparatus 100 judges that a group does not need to be deleted according to the registered equipment deletion, and the deletion process ends.

In addition, if the belonging group of the equipment to be deleted is found and the belonging equipment other than the equipment to be deleted is found and the decision result in the step S305 is YES, the equipment managing apparatus 100 judges that a group does not need to be deleted according to the registered equipment deletion, and the deletion process ends.

### «Belonging Group and Belonging Equipment Existence Judging Process: Part 1»

A description will be given of the processes of the belonging group judging part 221 in the steps S303, S304 and S305, by referring to the judging process illustrated in FIG. 8B.

As illustrated in FIG. 8B, the belonging group judging part 221 makes a reference to the group corresponding to the highest hierarchical layer, in a step S401. In this state, the belonging group judging part 221 makes access to the management information retaining part 31, and makes a reference to the group management information 31D.

Then, the belonging group judging part 221 makes a reference to all groups having the same parent and located in the same hierarchical layer, within the group management information 31D, in a step S402. More particularly, a reference is made to the following groups. That is, the belonging group judging part 221 makes a reference to the group (ROOT) corresponding to the highest hierarchical layer, and makes a reference to all groups having the group (ROOT) as the parent and located in the same hierarchical layer (first hierarchical layer).

Next, the belonging group judging part 221 acquires the registered value of the grouping condition items, in units of groups, in a step S403. In this state, the belonging group judging part 221 acquires from the group management information 31D the registered value of the grouping condition items in the hierarchical layer to which the reference is made by the step S402.

The belonging group judging part 221 compares the acquired registered values and the judging value extracted from the equipment information of the equipment to be deleted, in a step S404. In this state, the belonging group judging part 221 compares the registered values and the judging value corresponding to the information item of the group management information 31D from which the registered values are acquired.

The belonging group judging part 221 decides, from the comparison of the step S404, whether the equipment to be deleted belongs to the registered group (group to which the reference is presently being made), in a step S405. If the belonging group judging part 221 judges that the compared values do not match and the equipment to be deleted does not belong to the registered group (group to which the reference is presently being made), the decision result in the step S405 is NO and the process advances to a step S406. The belonging group judging part 221 decides whether a judgement has been made to determine the existence of the belonging group in all groups (all groups to which the reference is made) of the same hierarchical layer, in the step S406.

If the belonging group judging part 221 judges that the existence of the belonging group in all groups (all groups to which the reference is made) of the same hierarchical layer has not been judged, the decision result in the step S406 is NO. If the decision result in the step S406 is NO, the process returns to the step S403, in order to repeat the process of judging the existence of the belonging group in the group to which the reference is made but the existence of the belonging group has not been judged. On the other hand, if the belonging group judging part 221 judges that the existence of the belonging group in all groups (all groups to which the reference is made) of the same hierarchical layer has been judged, the decision result in the step S406 is YES. If the decision result in the step S406 is YES, the judgement result "no belonging group" is sent to the deleting part 223, and the process advances to a step S407.

Hence, the belonging group judging part 221 judges the existence of the belonging group with respect to all groups having the same parent and located in the same hierarchical layer, until the existence of the belonging group is confirmed. As a result, if the comparison result is "no match", the belonging group judging part 221 judges that the belonging group of the equipment to be deleted does not exist in all groups having the same parent and located in the same hierarchical layer. Accordingly, the process of the steps S403 to S406 is performed with respect to all groups having the same parent and located in the same hierarchical layer, until the existence of the belonging group is confirmed.

On the other hand, if the compared values match and the belonging group judging part 221 judges that the equipment to be deleted belongs to the registered group (group to which the reference is presently being made), the decision result in the step S405 is YES. If the decision result in the step S405 is YES, the belonging group judging part 221 acquires the number of registered equipments in the belonging group, in a step S408. The belonging group judging part 221 decides whether the acquired number of registered equipments is zero, in a step S409.

If the acquired number of registered equipments is zero and the decision result in the step S409 is YES, the belonging group judging part 221 sends the judgement result "belonging group exists (no other belonging equipment exists)" to the deleting part 223, in a step S410.

On the other hand, if the acquired number of registered equipments is non-zero and the decision result in the step S409 is NO, the belonging group judging part 221 decides whether the existence of the belonging group is judged down to the group corresponding to the lowest hierarchical layer, in a step S411. In this state, the belonging group judging part 221 judges whether the hierarchical layer (Nth hierarchical layer) in which the comparison judgement is made is the lowest hierarchical layer.

If the decision result in the step S411 is NO, the process returns to the step S402 in order to repeat the process of judging the existence of the belonging group with respect to the group in the lower hierarchical layer in which the existence of the belonging group has not been judged.

On the other hand, if the decision result in the step S411 is YES, the belonging group judging part 221 sends the judgement result "belonging group exists (other belonging equipment exists)" to the deleting part 223, in a step S412.

Hence, the equipment managing apparatus 100 judges the existence of the belonging group with respect to all groups having the same parent and located in the same hierarchical layer (Nth hierarchical layer), until the existence of the belonging group is confirmed. As a result, if the comparison result is "match", the equipment managing apparatus 100 judges that the belonging group of the equipment to be deleted exists in one of the groups having the same parent and located in the same hierarchical layer. In addition, when the existence of the belonging group is confirmed, the equipment managing apparatus 100 judges the existence of registered equipment (equipment to be managed other than the equipment to be deleted) in the belonging group. As a result, if the number of registered equipments is not "zero", the equipment managing apparatus 100 again judges the existence of the belonging group and the belonging equipment in the hierarchical layer ((N+1)th layer) that is 1 layer lower than the hierarchical layer in which the existence of the belonging group and the belonging equipment were confirmed.

The equipment managing apparatus 100 performs the process of the steps S402 to S411 in the above described manner with respect to the registered groups from the highest hierarchical layer to the lowest hierarchical layer.

Therefore, at the time of deleting the registered equipment, the equipment managing apparatus 100 judges the existence of the belonging group, in units of groups of each hierarchical layer (groups having the same parent and located in the same hierarchical layer), and judges the existence of the belonging equipment with respect to the confirmed belonging group.

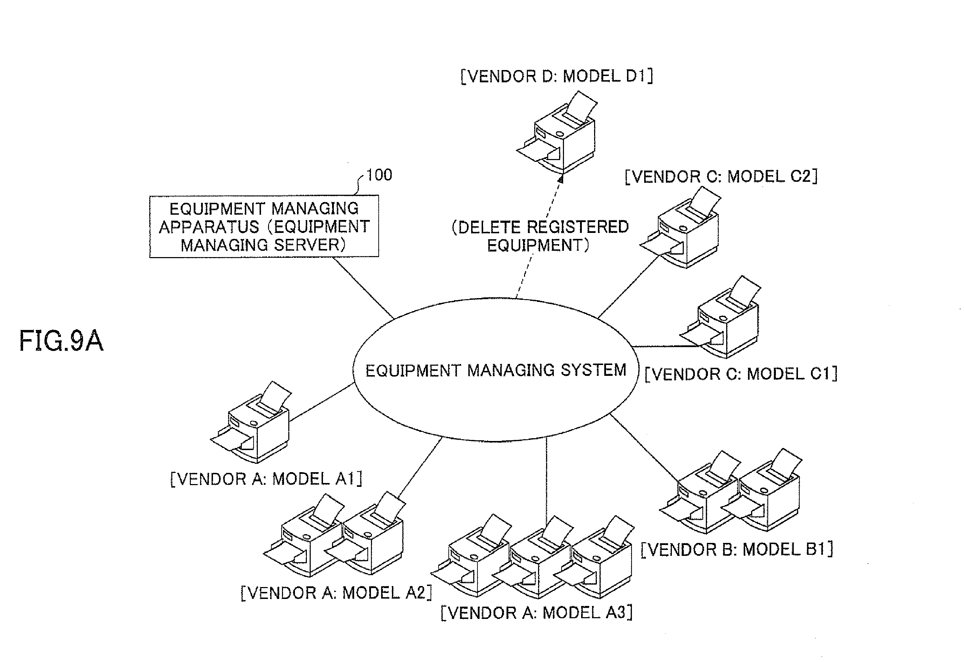

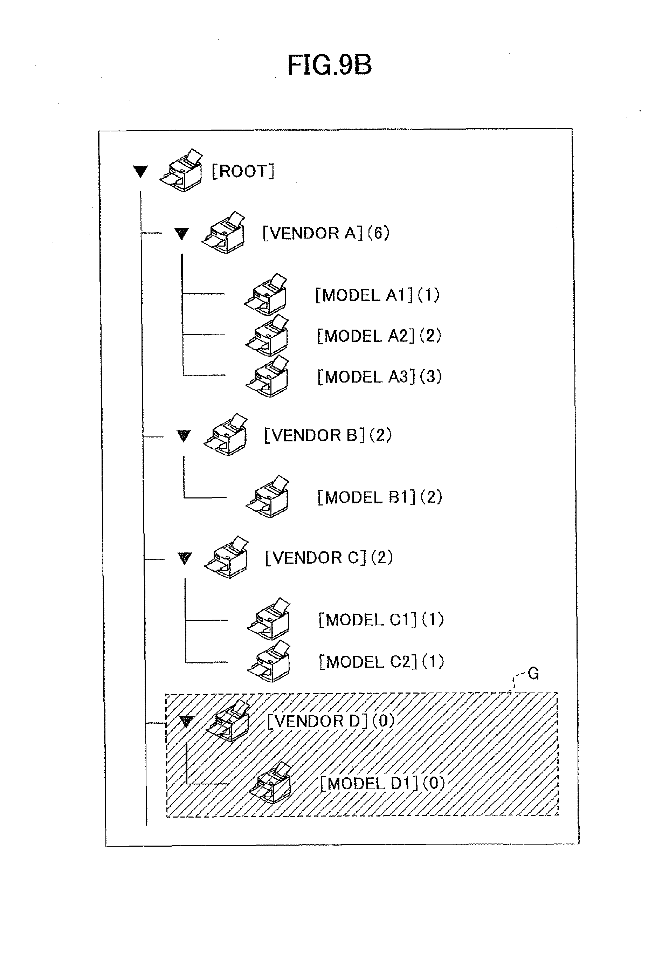

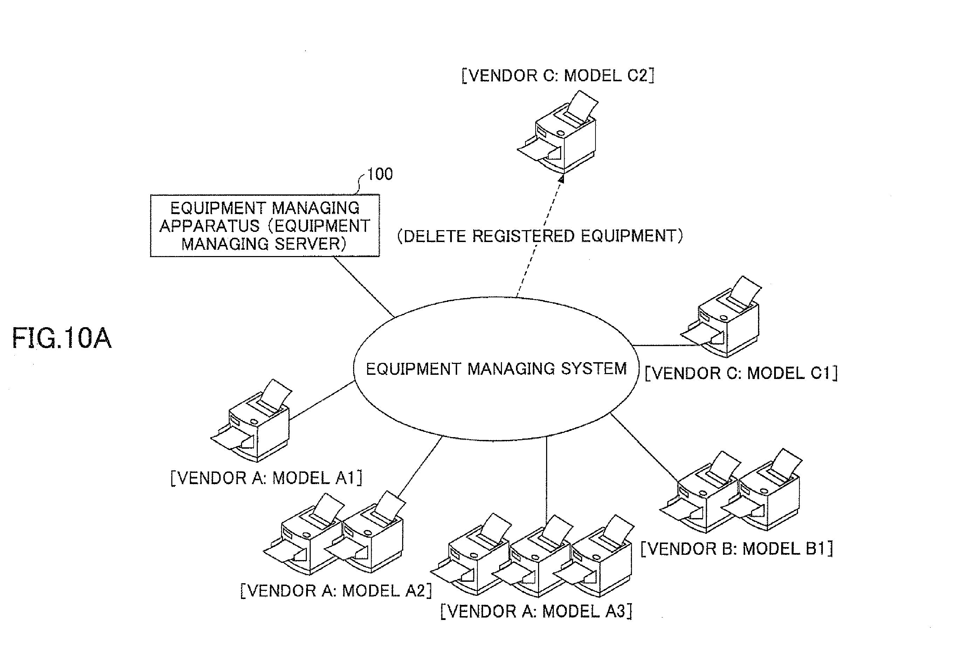

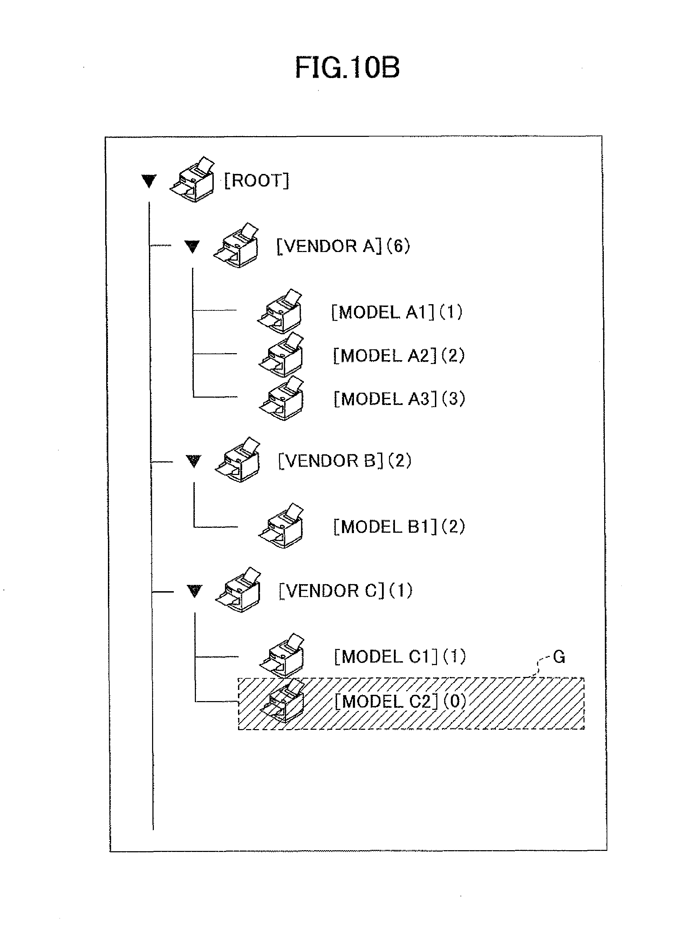

Next, a description will be given of an example operation of the processes described above in conjunction with FIGS. 8A and 8B, by referring to FIGS. 9A through 10B. FIGS. 9A, 9B, 10A and 10B are diagrams for explaining an example of a registered equipment delete operation (parts 1 and 2) in the first embodiment of the present invention.

### Registered Equipment Deletion: Part 1

FIG. 9A illustrates an example operation for a case where the registered equipment deletion relates to the model D1 of the vendor D. In this case, the step S302 extracts, as the judging value, the "vendor D" of the grouping condition item corresponding to the first hierarchical layer [vendor name], and the "model D1" of the grouping condition item corresponding to the second hierarchical layer [model name], from the equipment information of the equipment to be deleted.

First, the belonging group judging part 221 makes a reference to the 4 groups (vendor A, vendor B, vendor C, vendor D) of the same first hierarchical layer [vendor name] having the group (ROOT) of the highest hierarchical layer as the parent, within the group management information 31D.

Next, the belonging group judging part 221 compares the registered value ("vendor A", "vendor B", "vendor C", "vendor D") of the grouping condition item corresponding to the first hierarchical layer [vendor name], and the judging value ("vendor D") of the grouping condition item corresponding to the first hierarchical layer [vendor name] extracted from the equipment information of the equipment to be deleted, for each group to which the reference is made.

As a result, the belonging group judging part 221 judges that the equipment to be deleted belongs to the registered group (group to which the reference is presently being made) because the compared values match.

Then, the belonging group judging part 221 judges whether the number of registered equipments in the belonging group (vendor D) is zero. In this example, the number of registered equipments in the belonging group is zero. Hence, the belonging group judging part 221 judges that an equipment to be managed, other than the equipment to be deleted, does not belong to the belonging group (vendor D), and sends the judgement result "belonging group exists (no other belonging equipment exists)".

Accordingly, the deleting part 223 specifies the first hierarchical layer [vendor name] that matched, as the location of the hierarchical layer in which the group is to be deleted, and deletes a group as indicated by G in FIG. 9B. More particularly, the group of the specified first hierarchical layer [vendor name] (the registered group (vendor D) of the first hierarchical layer and the registered group (model D1) of the second hierarchical layer included in the registered group (vendor D)) is deleted from the group management information 31D.

As a result, the group (vendor D) corresponding to the first hierarchical layer [vendor name], and the group (model D1) corresponding to the second hierarchical layer [vendor name] under the group (vendor D) are deleted from the group management information 31D.

Registered Equipment Deletion (Part 2):
FIG. 10A illustrates an example operation for a case where the registered equipment deletion relates to the model C2 of the vendor C. In this case, the step S302 extracts, as the judging value, the "vendor C" of the grouping condition item corresponding to the first hierarchical layer [vendor name], and the "model C2" of the grouping condition item corresponding to the second hierarchical layer [model name], from the equipment information of the equipment to be deleted.

First, the belonging group judging part 221 makes a reference to the 3 groups (vendor A, vendor B, vendor C) of the same first hierarchical layer [vendor name] having the group (ROOT) of the highest hierarchical layer as the parent, within the group management information 31D. The group management information 31D to which the reference is made is after the equipment deletion of the model D1 of the vendor D has been made.

Next, the belonging group judging part 221 compares the registered value ("vendor A", "vendor B", "vendor C") of the grouping condition item corresponding to the first hierarchical layer [vendor name], and the judging value ("vendor C") of the grouping condition item corresponding to the first hierarchical layer [vendor name] extracted from the equipment information of the equipment to be deleted, for each group to which the reference is made.

As a result, the belonging group judging part 221 judges that the equipment to be deleted belongs to the registered group (group to which the reference is presently being made) because the compared values match.

Then, the belonging group judging part 221 judges whether the number of registered equipments of the belonging group (vendor C) is zero. In this example, the number of registered equipments in the belonging group is not zero, and the existence of the belonging group has not been judged down to the group corresponding to the lowest hierarchical layer. Hence, the belonging group judging part 221 judges whether the belonging group exists in the group (model C1, model C2) of the second hierarchical layer [model name] located 1 layer lower than the first hierarchical layer [vendor name].

Hence, the belonging group judging part 221 compares the registered value ("model C1", "model C2") of the grouping condition item corresponding to the second hierarchical layer [model name] and the judging value ("model C") of the grouping condition item corresponding to the second hierarchical layer [model name] extracted from the equipment information of the equipment to be deleted, for each group to which the reference is made.

As a result, the belonging group judging part 221 judges that the equipment to be deleted belongs to the registered group (group to which the reference is presently being made) because the compared values match.

Then, the belonging group judging part 221 judges whether the number of registered equipments in the belonging group (model C2) is zero. In this example, the number of registered equipments in the belonging group is zero. Hence, the belonging group judging part 221 judges that an equipment to be managed, other than the equipment to be deleted, does not belong to the belonging group (model C2), and sends the judgement result "belonging group exists (no other belonging equipment exists)".

Accordingly, the deleting part 223 specifies the first hierarchical layer [vendor name] that matched, as the location of the hierarchical layer in which the group is to be deleted, and deletes a group as indicated by G in FIG. 10B. More particularly, the group of the specified second hierarchical layer [model name] (the registered group (model C2) of the second hierarchical layer) is deleted from the group management information 31D.

As a result, only the group (model C2) corresponding to the second hierarchical layer [model name] under the group (vendor C) corresponding to the first hierarchical layer [vendor name] is deleted from the group management information 31D.

Next, a description will be given of other processes performed at the time of the data deletion.

In the example described above, the existence of the belonging group and the belonging equipment at the time of the data deletion is judged from the highest hierarchical layer to the lowest hierarchical layer, in a manner similar to the judgement performed at the time of the data registration. However, when performing the data deletion process, the existence of the belonging group and the belonging equipment may be judged from the lowest hierarchical layer to the highest hierarchical layer, in order to delete the management data according to the judgement result.

Depending on the equipment classification policy, the hierarchical structure may include a large number of hierarchical layers, which in turn may make the grouping condition of the hierarchical structure complex. In this case, rather than judging the existence of the belonging group and the belonging equipment from the highest hierarchical layer to the lowest hierarchical layer in this sequence, it may be more efficient to make the judgement from the lowest hierarchical layer to the highest hierarchical layer. This is because the group corresponding to a higher hierarchical layer of the hierarchical structure includes the group corresponding to a lower hierarchical layer of the hierarchical structure, and the number of equipments to be managed and belonging to the group corresponding to the higher hierarchical layer is large, with a high possibility that the equipment to be managed other than the equipment to be deleted belongs to the group corresponding to the higher hierarchical layer. In other words, there is only a low possibility that the number of registered equipments belonging to the group to be subjected to the control on whether to perform the data deletion is zero. For this reason, it may take time to specify the hierarchical layer in which the data deletion is to be performed.

On the other hand, the number of equipments to be managed and belonging to the group corresponding to the lower hierarchical layer is smaller than that belonging to the group corresponding to the higher hierarchical layer, and there is only a low possibility that the equipment to be managed other than the equipment to be deleted belongs to the group corresponding to the lower hierarchical layer. For this reason, the time to specify the hierarchical layer in which the data deletion is to be performed may be reduced.

Next, a mode detailed description will be given of the process of the belonging group judging part 221 that judges the existence of the belonging group and the belonging equipment from the lowest hierarchical layer to the highest hierarchical layer.

### «Belonging Group and Belonging Equipment Existence Judging Process: Part 1»

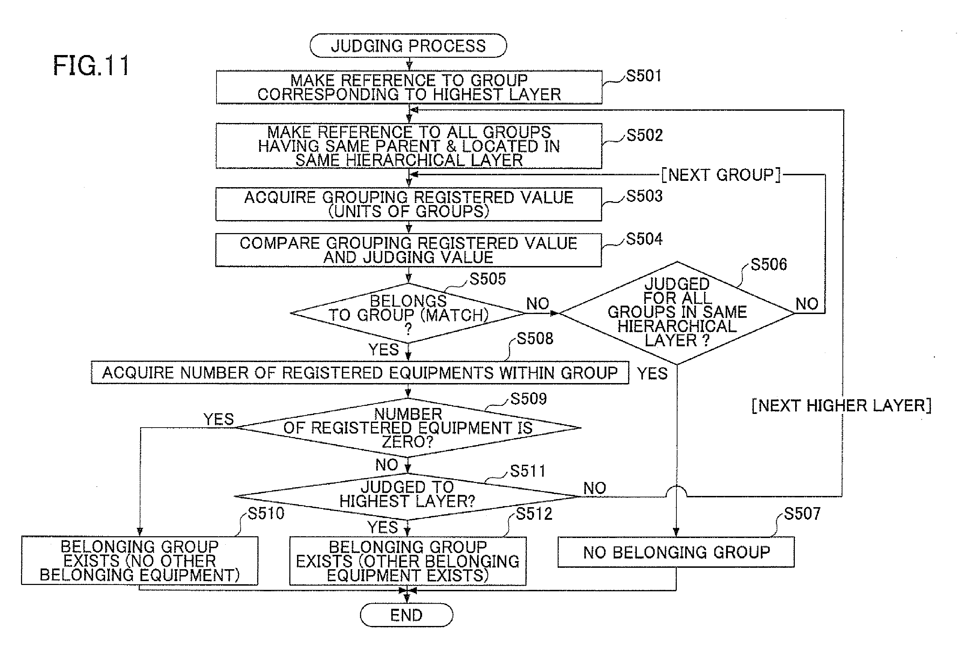

FIG. 11 is a flow chart for explaining a processing procedure to judge the existence of the group and the equipment belonging to the group in the first embodiment of the present invention.

As illustrated in FIG. 11, the belonging group judging part 221 makes a reference to the group corresponding to the lowest hierarchical layer, in a step S501. In this state, the belonging group judging part 221 makes access to the management information retaining part 31, and makes a reference to the group management information 31D.

Then, the belonging group judging part 221 makes a reference to all groups having the same parent and located in the same hierarchical layer, within the group management information 31D, in a step S502. More particularly, a reference is made to the following groups. That is, the belonging group judging part 221 makes a reference to the group corresponding to the lowest hierarchical layer, and makes a reference to all groups having this group as the parent and located in the same hierarchical layer (Nth hierarchical layer).

Next, the belonging group judging part 221 acquires the registered value of the grouping condition items, in units of groups, in a step S503. In this state, the belonging group judging part 221 acquires from the group management information 31D the registered value of the grouping condition items in the hierarchical layer to which the reference is made by the step S502.

The belonging group judging part 221 compares the acquired registered values and the judging value extracted from the equipment information of the equipment to be deleted, in a step S504. In this state, the belonging group judging part 221 compares the registered values and the judging value corresponding to the information item of the group management information 31D from which the registered values are acquired.

The belonging group judging part 221 decides, from the comparison of the step S504, whether the equipment to be deleted belongs to the registered group (group to which the reference is presently being made), in a step S505. If the belonging group judging part 221 judges that the compared values do not match and the equipment to be deleted does not belong to the registered group (group to which the reference is presently being made), the decision result in the step S505 is NO and the process advances to a step S506. The belonging group judging part 221 decides whether a judgement has been made to determine the existence of the belonging group in all groups (all groups to which the reference is made) of the same hierarchical layer, in the step S506.

If the belonging group judging part 221 judges that the existence of the belonging group in all groups (all groups to which the reference is made) of the same hierarchical layer has not been judged, the decision result in the step S506 is NO. If the decision result in the step S506 is NO, the process returns to the step S503, in order to repeat the process of judging the existence of the belonging group in the group to which the reference is made but the existence of the belonging group has not been judged. On the other hand, if the belonging group judging part 221 judges that the existence of the belonging group in all groups (all groups to which the reference is made) of the same hierarchical layer has been judged, the decision result in the step S506 is YES. If the decision result in the step S506 is YES, the judgement result "no belonging group" is sent to the deleting part 223, and the process advances to a step S507.

Hence, the belonging group judging part 221 judges the existence of the belonging group with respect to all groups having the same parent and located in the same hierarchical layer, until the existence of the belonging group is confirmed. As a result, if the comparison result is "no match", the belonging group judging part 221 judges that the belonging group of the equipment to be deleted does not exist in all groups having the same parent and located in the same hierarchical layer. Accordingly, the process of the steps S503 to S506 is performed with respect to all groups having the same parent and located in the same hierarchical layer, until the existence of the belonging group is confirmed.

On the other hand, if the compared values match and the belonging group judging part 221 judges that the equipment to be deleted belongs to the registered group (group to which the reference is presently being made), the decision result in the step S505 is YES. If the decision result in the step S505 is YES, the belonging group judging part 221 acquires the number of registered equipments in the belonging group, in a step S508. The belonging group judging part 221 decides whether the acquired number of registered equipments is zero, in a step S509.

If the acquired number of registered equipments is zero and the decision result in the step S509 is YES, the belonging group judging part 221 sends the judgement result "belonging group exists (no other belonging equipment exists)" to the deleting part 223, in a step SS10.

On the other hand, if the acquired number of registered equipments is non-zero and the decision result in the step S509 is NO, the belonging group judging part 221 decides whether the existence of the belonging group is judged up to the group corresponding to the highest hierarchical layer, in a step S511. In this state, the belonging group judging part 221 judges whether the hierarchical layer ((N-1)th hierarchical layer) that is 1 layer higher than the hierarchical layer in which the comparison judgement is made is the highest hierarchical layer.

If the existence of the belonging group has not been judged up to the group (ROOT) corresponding to the highest hierarchical layer, the decision result in the step S511 is NO, and the process returns to the step S502 in order to repeat the process of judging the existence of the belonging group with respect to the group in the higher hierarchical layer in which the existence of the belonging group has not been judged.

On the other hand, if the decision result in the step S511 is YES, the belonging group judging part 221 sends the judgement result "belonging group exists (other belonging equipment exists)" to the deleting part 223, in a step S512.

Hence, the equipment managing apparatus 100 performs the process of the steps S502 to S511 in the above described manner, with respect to the registered group from the lowest hierarchical layer to the highest hierarchical layer.

Therefore, at the time of deleting the registered equipment, the equipment managing apparatus 100 judges the existence of the belonging group, in units of groups of each hierarchical layer (groups having the same parent and located in the same hierarchical layer), and judges the existence of the belonging equipment with respect to the confirmed belonging group.

### «Main Process at the Time of Deletion: Part 2»

In addition, when performing the process to judge the existence of the belonging group and the belonging equipment, the main process at the time of the data deletion differs from that illustrated in FIG. 8A.

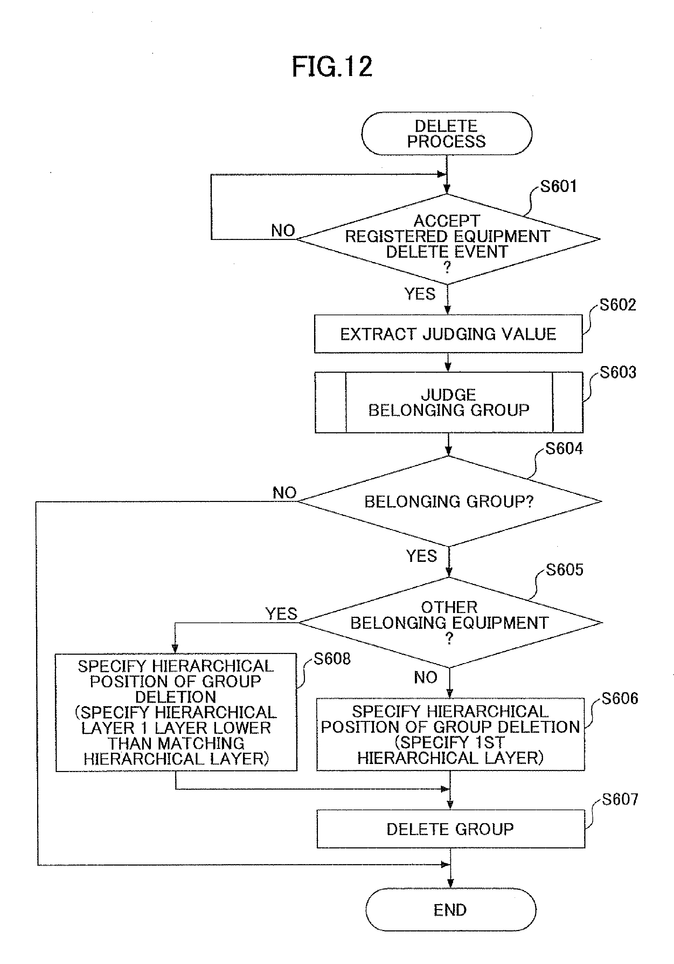

FIG. 12 is a flow chart for explaining a processing procedure (part 2) at the time of the data deletion in the first embodiment of the present invention. In FIG. 12, steps S601 to S603 are the same as the steps S301 to S303 illustrated in FIG. 8A. Hence, a description will only be given with respect to steps S604 to S607 which differ from the processing procedure illustrated in FIG. 8A.

The equipment managing apparatus 100 decides, based on the judgement of the step S603, whether the belonging group of the equipment to be deleted is found within the registered groups, in a step S604. If the belonging group of the equipment to be deleted is found and the decision result in the step S604 is YES, the belonging part judging part 221 decides whether a belonging equipment (belonging equipment to be managed) other than the equipment to be deleted exists (or does not exist) in the belonging group, in a step S605. In this state, the belonging group judging part 221 judges whether the equipment to be managed, other than the equipment to be deleted, belongs to the group, based on the number of registered equipments of the group.

If the equipment managing apparatus 100 judges that the there is no belonging equipment other than the equipment to be deleted exists in the belonging group and the decision result in the step S605 is NO, the deleting part 223 of the group managing part 22 specifies the hierarchical location of the group to be deleted, in a step S606. In this state, the group managing part 22 sends the judgement result of the belonging group judging part 221 to the deleting part 223 of the group managing part 22, based on the request process content information. The deleting part 223 specifies, as the hierarchical layer in which the group is to be deleted, the first hierarchical layer located 1 layer lower than the highest hierarchical layer that is judged as including the belonging group and not including the belonging equipment.

As a result, the equipment managing apparatus 100 deletes from the group management information 31D the group from the specified first hierarchical layer to the highest hierarchical layer, by the deleting part 223, in a step S607. In this state, the deleting part 223 makes access to the management information retaining part 31, and deletes the registered value of the grouping condition item from the specified first hierarchical layer to the highest hierarchical layer, in the group management information 31D, in order to update the management data and delete the group.

If the belonging group of the equipment to be deleted is not found and the decision result in the step S604 is NO, the equipment managing apparatus 100 judges that a group does not need to be deleted according to the registered equipment deletion, and the deletion process ends.

In addition, if the belonging group of the equipment to be deleted is found and the belonging equipment other than the equipment to be deleted is found and the decision result in the step S605 is YES, the deleting part 223 specifies the hierarchical position of the group to be deleted, according to a method different from that used by the step S606. In this state, the deleting part 223 specifies, as the hierarchical layer in which the group is to be deleted, the hierarchical layer ((N+1)th hierarchical layer) located 1 layer lower than the hierarchical layer that is judged as including the belonging group and not including the belonging equipment.

As a result, the equipment managing apparatus 100 deletes from the group management information 31D the group from the specified hierarchical layer ((N+1)th hierarchical layer) to the lowest hierarchical layer, by the deleting part 223, in the step S607.

In the case where the existence of the belonging group and the belonging equipment is judged with respect to the registered groups from the lowest hierarchical layer to the highest hierarchical layer, the equipment managing apparatus 100 specifies, as the hierarchical layer in which the group is to be deleted, the hierarchical layer ((N+1)th hierarchical layer) located 1 hierarchical layer lower than the hierarchical layer in which the existence is confirmed, in order not to erroneously delete the group that includes the belonging equipment.

### <Modification>

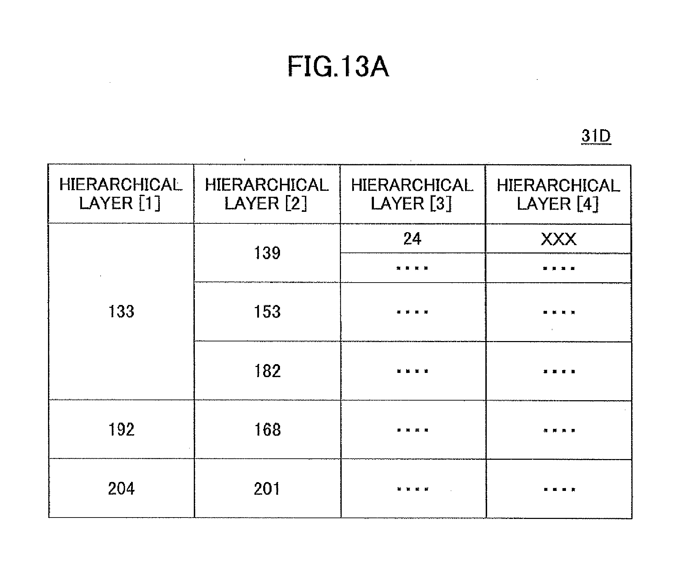

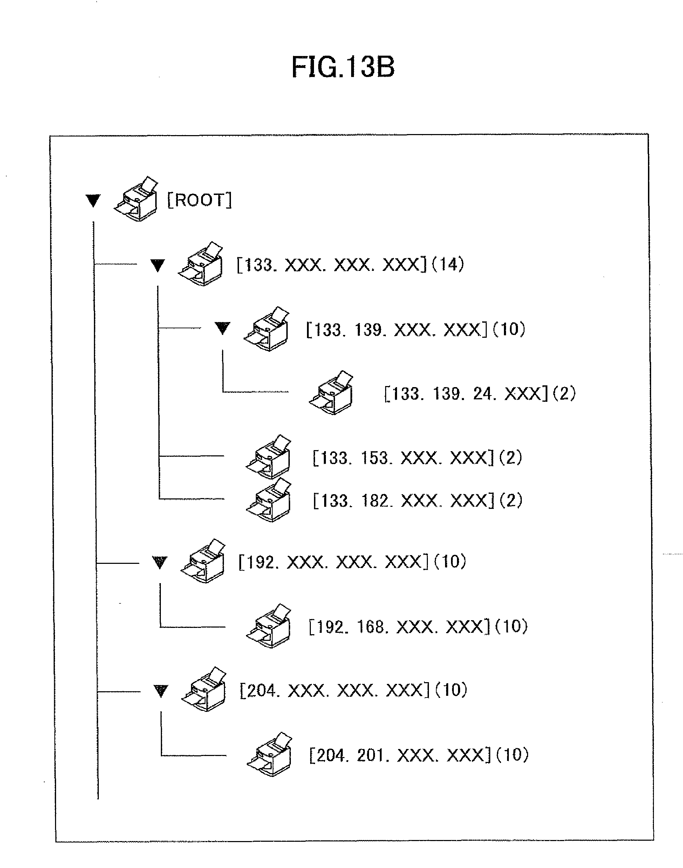

Next, a description will be given of a case where the equipments to be managed are grouped based on the network setting, such as the IP address. FIGS. 13A and 13B are diagrams illustrating an example of the data of the group management information by a network setting and a management screen in a modification of the present invention.

As illustrated in FIG. 13A, the group management information 31D according to the network setting registers and manages, as the grouping condition item of the groups corresponding to each of the hierarchical layers, each segment of the IP address in correspondence with the inclusion relationship of the groups.

In addition, each item value from the group in the first hierarchical layer to the lowest hierarchical layer is registered in the group management information 31D, in correspondence with the sequence from the group (ROOT) in the highest hierarchical layer of the hierarchical structure, so that the hierarchical layers have the parent-child relationship.

Hence, the management information retaining part 31 retains the group management information 31D having the data structure described above.

The group managing part 22 makes access to the management information retaining part 31, and makes a reference to the group management information 31D, in order to display a management screen illustrated in FIG. 13B, for example.

FIG. 13B illustrates an example of the management screen of the equipments to be managed classified in a hierarchical structure that is visible on the management screen, according to the grouping condition of the "segment value" of the IP address. The manager may easily comprehend from the management screen the number of equipments to be managed in the equipment managing system and the "segment" of the IP address allocated to these equipments to be managed.

In the embodiment described above, the grouping condition of the equipment to be managed includes the vendor name, the model name, and the like. In other words, the equipments to be managed are grouped based on the equipment information unique to each of the individual equipments.

However, the network setting may be changed in the registered equipment by causes other than a change such as the registration of a new equipment, replacement of the registered equipment, and removal of the registered equipment. For this reason, in the group management information 31D in which the grouping condition based on the network setting is registered and managed, the data update must be performed when the network setting of the equipment to be managed is changed. In addition, when performing the data update, the change must be made after deleting the segment value of the old IP address, that is, the registered value of the old grouping condition item.

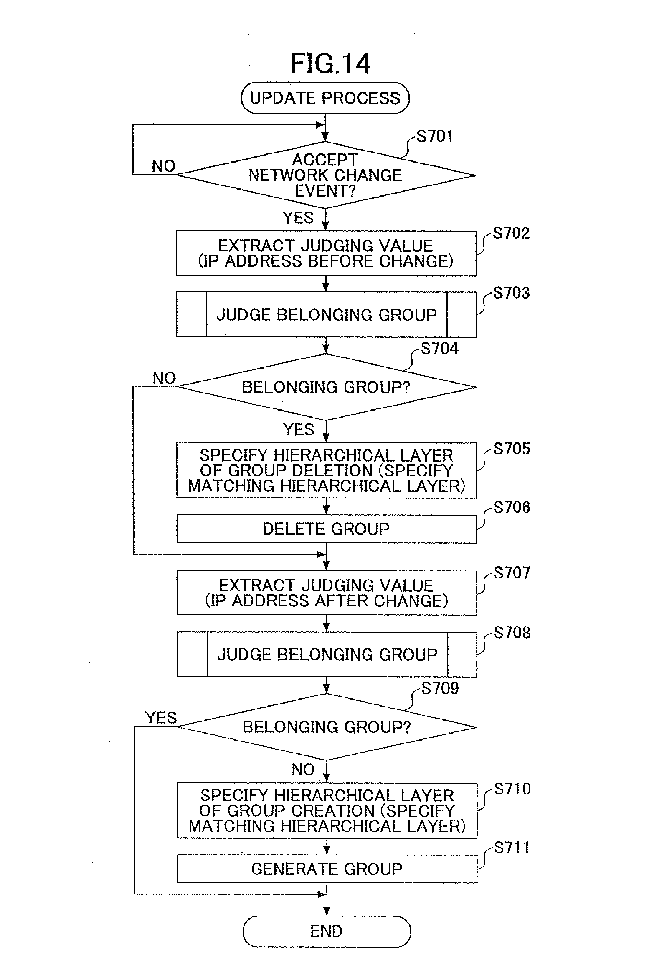

Hence, in a case where the group management information 31D may be changed in the registered equipment, such as by the network setting, the equipment managing apparatus 100 performs the data update according to a processing procedure illustrated in FIG. 14, for example. FIG. 14 is a flow chart for explaining the processing procedure at the time of changing the network setting in this modification of the present invention.

As illustrated in FIG. 14, the equipment managing apparatus 100 decides whether event information of a network setting change is received from the event detecting part 21, in a step S701. If the decision result in the step S701 is YES, the equipment managing apparatus 100 acquires the request process content information and network setting information from the event information.

Then, the group managing part 22 of the equipment managing apparatus 100 extracts the judging value to be used to judge whether the belonging group of the equipment to be changed exists within the registered groups, from the network setting information, in a step S702. In this state, the group managing part 22 extracts the IP address before the change from the network setting information.

Next, the equipment managing apparatus 100 judges, by the belonging group judging part 221 of the group managing part 22, whether the belonging group of the equipment to be changed exists within the registered groups, based on the acquired judging value, in a step S703.

The equipment managing apparatus 100 decides, based on the judgement of the step S703, whether the belonging group of the equipment to be changed is found within the registered groups, in a step S704. If the belonging group of the equipment to be changed is found and the decision result in the step S704 is YES, the deleting part 223 of the group managing part 22 specifies the hierarchical position of the group to be deleted, in a step S705. In this state, the group managing part 22 sends the judgement result of the belonging group judging part 221 to the deleting part 223 of the group managing part 22, based on the request process content information. The deleting part 223 specifies as the hierarchical layer in which the group is to be deleted, the hierarchical layer that is judged as including the belonging group.

As a result, the equipment managing apparatus 100 deletes the corresponding group in the group management information 31D from the specified hierarchical layer to the lowest hierarchical layer, by the deleting part 223, in a step S706. In this state, the deleting part 223 makes access to the management information retaining part 31, and deletes the corresponding group, by deleting the registered value of the grouping condition item from the specified hierarchical layer to the lowest hierarchical layer from the group management information 31D and updating the management data.

If the belonging group of the equipment to be changed is not found and the decision result in the step S704 is NO, the equipment managing apparatus 100 judges that there is no need to delete the corresponding group according to the change in the network setting.

Next, the group managing part 22 of the equipment managing apparatus 100 extracts the judging value to be used to judge whether the belonging group of the equipment to be changed exists within the registered groups, from the network setting information, in a step S707. In this state, the group managing part 22 extracts the IP address after the change from the network setting information.

Then, the equipment managing apparatus 100 judges, by the belonging group judging part 221 of the group managing part 22, whether the belonging group of the equipment to be changed exists within the registered groups, based on the acquired judging value, in a step S708.

The equipment managing apparatus 100 decides, based on the judgement of the step S708, whether the belonging group of the equipment to be changed is found (or not found) within the registered groups, in a step S709. If the belonging group of the equipment to be changed is not found and the decision result in the step S709 is NO, the deleting part 223 of the group managing part 22 specifies the hierarchical position of the group to be newly created, in a step S710. In this state, the group managing part 22 sends the judgement result of the belonging group judging part 221 to the registering part 222 of the group managing part 22, based on the request process content information. The registering part 222 specifies as the hierarchical layer in which the group is to be created, the hierarchical layer that is judged as not including the belonging group.

As a result, the equipment managing apparatus 100 generates the new group in the group management information 31D from the specified hierarchical layer to the lowest hierarchical layer, by the registering part 222, in a step S711. In this state, the registering part 222 makes access to the management information retaining part 31, and generates the new group, by registering the judging value corresponding to the grouping condition item in the grouping condition item from the specified hierarchical layer to the lowest hierarchical layer in the group management information 31D and updating the management data.

If the belonging group of the equipment to be changed is found and the decision result in the step S709 is YES, the equipment managing apparatus 100 judges that there is no need to generate a new group according to the change in the network setting, and the process ends.

Therefore, in a case where the network setting is the grouping condition of the grouping management information 31D, the equipment managing apparatus 100 first deletes the group corresponding to the IP address before the change, and then generates the new group corresponding to the IP address after the change, to thereby update the management data.

According to the equipment managing apparatus 100 of this embodiment, the event detecting part 21 receives the event information that is issued when a change occurs in the equipment configuration. The group managing part 22 of the equipment managing apparatus 100 acquires the request process content and the grouping condition (judging value) of the group to which the equipment belongs, from the received event information. Based on the acquired grouping condition, the group managing part 22 of the equipment managing apparatus 100 makes a reference to the grouping condition (registered value) of the registered groups in the group management information 31D, and judges whether the belonging group of the equipment exists within the registered group. The group managing part 22 of the equipment managing apparatus 100 registers or deletes the management data of the request process, according to the request process content and the judgement result.

Hence, in the equipment managing apparatus 100 of this embodiment, the group management information 31D is automatically updated depending on the change in the equipment configuration of the equipments to be managed. As a result, the operation of the manager may be reduced, and the performance of the equipment managing function may be prevented from deteriorating due to a delay or an error in the information updating.

The "equipment managing function" of the embodiment may be performed by a processing unit (for example, CPU or computer) of the equipment managing apparatus 100, which executes a program coded in a programming language suited for an operating environment (platform). The program, when executed by the processing unit, causes the processing unit to execute the processing procedures described above in conjunction with the drawings.

In addition, the program may be stored in any suitable non-transitory computer-readable storage medium, including the recording medium 103a. For example, the program stored in the computer-readable storage medium may be installed in the equipment managing apparatus 100 via the drive unit 103. Moreover, the program may be downloaded via a communication line and installed in the equipment managing apparatus 100 via the interface unit 107, for example.

In the embodiments described above, the existence of the belonging group and the belonging equipment is judged at the time of the data deletion according to a first method which judges from the highest hierarchical layer to the lowest hierarchical layer or, a second method which judges from the lowest hierarchical layer to the highest hierarchical layer. However, the method used for the judgement is of course not limited to such first and second methods. For example, a control may be performed to switch between the first and second methods depending on the depth (that is, the number of hierarchical layers) of the hierarchical structure. More particularly, at the time of the data deletion, the basic process (default) may use the first method for the judgement, and when the depth (that is, the number of hierarchical layers) of the hierarchical structure becomes greater than a predetermined value in the group management, the method used for the judgement may be controlled and switched to the second method. In this case, the processing time at the time of the data deletion may be optimized depending on the hierarchical structure of the group management.

Further, the present invention is not limited to these embodiments, but various variations and modifications may be made without departing from the scope of the present invention.

## Claims

1. An equipment managing apparatus to manage equipments via a data channel, comprising:
retaining means for retaining, in a predetermined storage region, management information for grouping an equipment to be managed according to a predetermined condition;
event detecting means for detecting event information that is issued when a change occurs in an equipment configuration of the equipments to be managed, and acquiring, from the event information, request process content information indicating contents of a request process and equipment information; and
information managing means for updating the management information based on the request process content information and the equipment information,
wherein the information managing means makes a reference to registered grouping condition information of groups registered in the management information retained in the retaining means, based on grouping condition information of a belonging group to which the equipment to be managed belongs and included in the equipment information, to make a judgement on whether the belonging group exists within the registered groups, and
wherein data of the management information is registered or deleted according to the request process content information and a result of the judgement made by the information managing means.

2. The equipment managing apparatus as claimed in claim 1, wherein the information managing means makes a comparison of the registered grouping condition information included in the management information and the grouping condition included in the equipment information, and judges the existence of the belonging group based on a result of the comparison.

3. The equipment managing apparatus as claimed in claim 2, wherein
the retaining means retains, as the management information, the registered grouping condition information according to a hierarchical structure representing an inclusion relationship of the registered groups; and
the information managing means acquires the registered grouping condition information for each hierarchical layer according to the hierarchical structure of the management information, and compares the registered grouping condition information acquired and the grouping condition information acquired from the equipment information.

4. The equipment managing apparatus as claimed in claim 3, wherein the information managing means acquires the registered grouping condition information in units of groups having same parent and located in same hierarchical layer, in a sequence from a highest hierarchical layer according to the hierarchical structure of the management information.

5. The equipment managing apparatus as claimed in any of claims 2 to 4, wherein the information managing means updates the management information by registering a new group in the management information based on the grouping condition information included in the equipment information, if the request process content information forms a data update request and the result of the judgement indicates that no belonging group exists within the registered groups.

6. The equipment managing apparatus as claimed in claim 5, wherein the information managing means specifies, as a hierarchical layer in which a new group is to be registered, a hierarchical layer that is judged as including no belonging group in the hierarchical structure of the management information, and updates the management information by registering the grouping condition information included in the equipment information in a registered grouping condition item of the management information from the specified hierarchical layer to a lowest hierarchical layer.

7. The equipment managing apparatus as claimed in any of claims 2 to 6, wherein the information managing means judges whether an equipment to be managed other than an equipment to be deleted belongs to the belonging group, if the request process content information forms a data delete request and the result of the judgement indicates that the belonging group exists within the registered groups, and updates the management information by deleting the registered grouping condition information from the management information if the equipment to be managed and other than the equipment to be deleted does not belong to the belonging group.

8. The equipment managing apparatus as claimed in claim 7, wherein the information managing means judges whether the equipment to be managed other than the equipment to be deleted belongs to the belonging group, based on a number of registered equipments in the belonging group when the result of the judgement indicates that the belonging group exists within the registered groups.

9. The equipment managing apparatus as claimed in claim 7 or 8, wherein the information managing means
specifies, as a hierarchical layer in which a group is to be deleted, a hierarchical layer that is judged as including the belonging group in the hierarchical structure of the management information,
specifies, as a group to be deleted, the belonging group to which the equipment to be managed other than the equipment to be deleted is judged not to belong, in the specified hierarchical layer, and
updates the management information by deleting the registered grouping condition information of the group to be deleted, from the specified hierarchical layer to a lowest hierarchical layer.

10. The equipment managing apparatus as claimed in any of claims 2 to 9, wherein
the retaining means retains, as the management information, the registered grouping condition information according to a hierarchical structure representing an inclusion relationship of the registered groups, and
the information managing means acquires the registered grouping condition information in units of groups having same parent and located in same hierarchical layer, in a sequence from a highest hierarchical layer according to a hierarchical structure of the management information, and compares the registered grouping condition information acquired and the grouping condition information acquired from the equipment information, when making the judgement on whether the belonging group exists within the registered groups, if the request process content information forms a data delete request.

11. The equipment managing apparatus as claimed in any of claims 1 to 10, wherein
the retaining means retains, as the management information, the registered grouping condition information based on setting information changeable by the equipment to be managed, and
if the request process content information forms a data change request,
the information managing means
makes a comparison of the registered grouping condition information in the management information and grouping condition information before a change acquired from the setting information, to judge whether the belonging group exists based on a result of the comparison, and
updates the management information by registering a new group in the management information based on grouping condition information after the change acquired from the setting information, if the belonging group does not exist according to the result of the comparison.

12. An equipment managing method to be implemented in an equipment managing apparatus that manages equipments via a data channel and includes a retaining means for retaining, in a predetermined storage region, management information for grouping an equipment to be managed according to a predetermined condition, said equipment managing method comprising:
an event detecting procedure to detect event information that is issued when a change occurs in an equipment configuration of the equipments to be managed, and to acquire, from the event information, request process content information indicating contents of a request process and equipment information;
a judging procedure to make a reference to registered grouping condition information of groups registered in the management information retained in the retaining means, based on grouping condition information of a belonging group to which the equipment to be managed belongs and included in the equipment information, and make a judgement on whether the belonging group exists within the registered groups; and
an information update procedure to register or delete data of the management information according to the request process content information and a result of the judgement made by the judging procedure.

13. An equipment managing system comprising:
a plurality of equipments; and
an equipment managing apparatus to manage the plurality of equipments via a data channel,
said equipment managing apparatus comprising:
retaining means for retaining, in a predetermined storage region, management information for grouping an equipment to be managed according to a predetermined condition;
event detecting means for detecting event information that is issued when a change occurs in an equipment configuration of the plurality of equipments to be managed, and acquiring, from the event information, request process content information indicating contents of a request process and equipment information; and
information managing means for updating the management information based on the request process content information and the equipment information,
wherein the information managing means makes a reference to registered grouping condition information of groups registered in the management information retained in the retaining means, based on grouping condition information of a belonging group to which the equipment to be managed belongs and included in the equipment information, to make a judgement on whether the belonging group exists within the registered groups, and
wherein data of the management information is registered or deleted according to the request process content information and a result of the judgement made by the information managing means.
